(19) Europäisches Patentamt
European Patent Office
Office européen des brevets

(11) Veröffentlichungsnummer : **0 029 049**
**B1**

(12) # EUROPÄISCHE PATENTSCHRIFT

(45) Veröffentlichungstag der Patentschrift : **13.07.83**

(51) Int. Cl.³ : **G 03 F 3/08**

(21) Anmeldenummer : **80901004.4**

(22) Anmeldetag : **17.05.80**

(86) Internationale Anmeldenummer : **PCT/DE 80/00070**

(87) Internationale Veröffentlichungsnummer : **WO WO/80026 (27.11.80 Gazettee 80/27)**

(54) **VERFAHREN UND SCHALTUNGSANORDNUNG ZUR PARTIELLEN ELEKTRONISCHEN RETUSCHE BEI DER FARBBILDREPRODUKTION.**

(30) Priorität : **18.05.79 DE 2920058**

(43) Veröffentlichungstag der Anmeldung : **27.05.81 Patentblatt 81/21**

(45) Bekanntmachung des Hinweises auf die Patenterteilung : **13.07.83 Patentblatt 83/28**

(84) Benannte Vertragsstaaten : **AT CH FR GB LI NL SE**

(56) Entgegenhaltungen :
**FR A 2 394 114**
**GB A 1 522 514**

(73) Patentinhaber : **DR.-ING. RUDOLF HELL GmbH**
**Grenzstrasse 1-5**
**D-2300 Kiel 14 (DE)**

(72) Erfinder : **GAST, Uwe**
**Rammsmoor 2**
**D-2300 Rammsee (DE)**
Erfinder : **HENNIG, Eberhard**
**Bundhorster Chaussee 3**
**D-2323 Ascheberg (DE)**
Erfinder : **PREUSS, Dieter**
**Seebrookswiese 21**
**D-2300 Klausdorf (DE)**
Erfinder : **TAUDT, Heinz**
**Quinckestrasse 7**
**D-2300 Kiel (DE)**
Erfinder : **WELLENDORF, Klaus**
**Kreienholt 6**
**D-2305 Heikendorf (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 029 049 B1

# Verfahren und Schaltungsanordnung zur partiellen elektronischen Retusche bei der Farbbildreproduktion

## Technisches Gebiet

Die vorliegende Erfindung bezieht sich auf die elektronische Reproduktionstechnik, insbesondere auf ein Verfahren zur partiellen elektronischen Retusche bei der Farbbildreproduktion, in dem die durch bildpunktweise und trichromatische Vorlagenabtastung erzeugten Farbsignale digitalisiert und die digitalen Farbwerte der einzelnen Farbkomponenten in einem Speichermedium abgelegt werden und in dem die gespeicherten Farbwerte unter Kontrolle geändert werden, sowie auf eine Schaltungsanordnung zur Durchführung des Verfahrens.

## Zugrundeliegender Stand der Technik

Bei der elektronischen Farbreproduktion werden in einem Farbscanner durch punkt- und zeilenweise optoelektronische Abtastung von farbigen Vorlagen und durch spektrale Farbzerlegung drei primäre Farbmeßwertsignale gewonnen, welche die Farbanteile Rot, Grün und Blau der abgetasteten Bildpunkte darstellen.

Ein Farbkorrektur-Rechner korrigiert die Farbmeßwertsignale nach den Gesetzmäßigkeiten der subtraktiven Farbmischung und erzeugt die Farbauszugssignale, welche ein Maß für die im späteren Druck erforderlichen Druckfarbmengen sind.

Die Farbauszugssignale werden digitalisiert und als Farbdaten in einem Speichermedium abgelegt, um die Farbauszüge gegebenenfalls zu einem späteren Zeitpunkt oder an einem anderen Ort aufzuzeichnen oder aber um die Farbdaten verschiedener Einzelvorlagen nach einem Layout-Plan zu einer Datenmenge zu vereinigen, die einer Gesamtseite entspricht.

Zur Aufzeichnung der Farbauszüge werden die Farbdaten der Einzelvorlagen oder der Gesamtseite aus dem Speichermedium ausgelesen, in analoge Farbauszugssignale zurückgewandelt und Schreiblampen als Aufzeichnungsorganen zugeführt, deren Helligkeiten durch die zugehörigen Farbauszugssignale moduliert werden. Die Schreiblampen belichten punkt- und zeilenweise ein Aufzeichnungsmedium in Form von Filmen, welche nach der Entwicklung die gewünschten gerasterten oder ungerasterten Farbauszüge «Gelb», «Magenta», «Cyan» und «Schwarz» zur Herstellung der Druckformen darstellen.

In dem Reproduktionsprozeß werden häufig nachträgliche partielle Retuschen (Farb- und/oder Tonwertkorrekturen) notwendig, sei es, um die in dem Farbkorrektur-Rechner erfolgte Korrektur zu optimieren oder aber um redaktionelle Änderungen und Kundenwünsche zu berücksichtigen. Bei den Retuschen handelt es sich beispielsweise um das Aufsetzen von Glanzlichtern durch Aufhellen, um das Herausarbeiten von Schattenpartien durch Abdunkeln, um die Verbesserung der Zeichnung durch Aufhellen und Abdunkeln oder einfach um Farbänderungen.

Während die durch den Farbkorrektur-Rechner vorgenommene Korrektur einer Farbe überall dort wirksam ist, wo diese Farbe in der Vorlage oder in dem reproduzierten Bild auftritt, soll eine derartige Retusche auf wählbare, örtlich begrenzte Bildbereiche beschränkt sein. Hinzu kommt, daß der Korrektureinfluß innerhalb der Bildbereiche häufig auch verlaufend, d. h. allmählich zunehmend oder abnehmend, sein soll, um z. B. weiche Konturen zu erzielen oder Halbschatten zu erzeugen.

Diese Retuschen werden in der Reproduktionstechnik manuell mit einem Retuschepinsel in der Vorlage selbst (Vorlagen-Retusche) oder aber in den einzelnen Farbauszügen (Auszugs-Retusche) durchgeführt.

Typische Arbeiten bei der Vorlagen-Retusche, auch Farbretusche genannt, sind das Umfärben und Abdunkeln durch partielles Auftragen von lasierenden oder deckenden Retuschefarben mit dem Retuschepinsel, wobei ohne Änderung des Farbtons oft nur die Farbsättigung verstärkt werden soll. Ebenso das Aufhellen von Bildpartien durch Ausbleichen der Farbschichten im Farbmaterial mit geeigneten Chemikalien. Es zeigt sich, daß ein Umfärben nur in solchen Farben erfolgen kann, die durch subtraktives Mischen von Vorlagenfarben und Retuschefarben entstehen. Die Wahl der Retuschefarbe setzt dabei große Erfahrungen voraus. Ein Umfärben in eine komplementäre Farbe ist praktisch nicht möglich. Das Ausbleichen kann zu störenden Farbtonverschiebungen führen.

Von der retuschierten Vorlage müssen mittels eines Farbscanners neue Farbauszüge erstellt werden. Retuschefarben und Vorlagenfarben weisen häufig unterschiedliche Spektralverteilungen auf, so daß sie im Farbscanner trotz visueller Farbübereinstimmung unterschiedlich reproduziert werden, da die Farbtrenneigenschaften im Farbscanner nicht der physiologischen Empfindlichkeit des Auges entsprechen.

Typische Arbeiten bei der Auszugs-Retusche in einem Halbton-Farbauszug sind das Abdunkeln durch Auftragen einer grauen Retuschefarbe und das Aufhellen mit chemischen Abschwächern. Retuschefarbe bzw. Abschwächer müssen mit einem sehr feuchten Retuschepinsel aufgetragen werden, so daß sich randgenaue Konturen schwer erzielen lassen. Bei einem gerasterten Farbauszug läßt sich ohne umfangreiche Kopierarbeit auf konventionelle Weise nur eine Verkleinerung der Rasterpunkte (Aufhellung) durch eine sogenannte Punktätzung erzielen.

Zur Beurteilung der Retuschearbeiten müssen Kontrolldrucke angefertigt werden, da insbesondere bei Auszugs-Retuschen die Auswirkung auf das farbige Endprodukt nicht unmittelbar erkennbar ist.

Es wurde aufgezeigt, daß auch in einem elektronischen Reproduktionsprozeß noch umfangreiche Retuschen notwendig sind, die, da bisher rein manuell mit dem Retuschepinsel ausgeführt, große Erfahrungen voraussetzen, aufwendig und zeitraubend sind und teilweise nur unvollkommen durchgeführt werden können.

Aus der US-PS 4 007 362 (DE-OS 24 30 762) ist bereits ein Verfahren bekannt, mit dem nachträgliche Farbkorrekturen in ausgewählten Bildbereichen durch Ändern der gespeicherten Bildinformationen durchgeführt werden können. Mittels eines Koordinatenerfassungsgerätes wählt eine Bedienungsperson die Lagekoordinaten der zu korrigierenden Bildpunkte in dem Bild, wodurch der adressenmäßige Zugriff zu den gespeicherten Bildinformationen geschaffen wird. Die Bedienungsperson gibt dann die gewünschten Korrekturbeträge über die Tasten einer Bedienungseinheit in einen Rechner ein, der die gespeicherten Bildinformationen durch Bewertung mit multiplikativen oder additiven Größen in die geänderten Bildinformationen umrechnet.

Mit dem bekannten Verfahren können zwar durch Eingabe von einzelnen Korrekturbeträgen partielle Farbkorrekturen durchgeführt werden, Ergebnisse wie bei der konventionellen Retusche mit dem Retuschepinsel lassen sich kaum erzielen, was als Nachteil angesehen wird. Beispielsweise dürfte es mit dem bekannten Verfahren schwer sein, die in der Praxis sehr häufig gewünschten verlaufenden Korrekturen mit allmählich ansteigendem oder abfallendem Einfluß wie z. B. einen Halbschatten ohne störende Dichtesprünge zu erzeugen.

Weiterhin wird als nachteilig angesehen, daß zur Bestimmung der Lagekoordinaten eine im Format mit dem zu reproduzierenden Bild übereinstimmende Aufsichts- oder Durchsichtsvorlage auf das Koordinaten-Erfassungsgerät aufgespannt sein muß. Solche Vorlagen sind oft nicht vorhanden, da die ursprünglichen Vorlagen selten mit dem Endformat übereinstimmen und erst im Farbscanner auf das Endformat elektronisch vergrößert werden. In der genannten Patentschrift wird zwar angegeben, daß die Koordinatenerfassung auch ohne Aufsichts- oder Durchsichtsvorlage mittels eines Lichtgriffels am Bildschirm des Monitors erfolgen kann, aber diese Art der Koordinatenerfassung hat den Nachteil, daß aufgrund der geringeren Auflösung nur eine grobe Korrektur erfolgt. Außerdem läßt sich der Patentschrift nicht entnehmen, wie das Korrekturverfahren im einzelnen ablaufen soll.

## Offenbarung der Erfindung

Aufgabe der vorliegenden Erfindung ist es daher, ein Verfahren und eine Schaltungsanordnung für die Farbbildreproduktion anzugeben, mit denen insbesondere verlaufende Retuschen, wie bei der konventionellen Retusche mit dem Retuschepinsel erzielt werden und mit denen darüber hinaus Korrekturen ermöglicht werden, die mit der konventionellen Retusche nicht durchführbar sind.

Diese Aufgabe wird, ausgehend von dem im Oberbegriff des Anspruchs 1 definierten Verfahren, dadurch gelöst, daß folgende Verfahrensschritte durchgeführt werden :

a) Festlegen von Farbinkrementen ($\Delta Y$ bzw. $\Delta M$, $\Delta C$, $\Delta K$) für die einzelnen Farbkomponenten vor der Koordinaten-Erfassung, wobei die Farbinkremente jeweils die kleinsten Änderungsbeträge pro Korrekturschritt für die Farbwerte (Y bzw. M, C, K) angeben ;

b) Festlegen der Retuscherichtung (Positiv- oder Negativ-Retusche) durch Vorzeichenvorgabe vor der Koordinaten-Erfassung ;

c) Gewinnen eines Retuschefaktors (r) für jedes erfaßte Ortskoordinaten-Paar (x, y) mittels der Markiervorrichtung zur gleichzeitigen Bestimmung der Retuschestärke bei der Koordinaten-Erfassung, wobei der Retuschefaktor (r) für jeden zu retuschierenden Bildpunkt die Anzahl der zu summierenden oder zu subtrahierenden Farbinkremente angibt ;

d) Bilden von Korrekturwerten ($Y_R$ bzw. $M_R$, $C_R$, $K_R$), welche den zu retuschierenden Bildpunkten ortsmäßig zugeordnet sind, für die einzelnen Farbkomponenten durch Multiplikation der Farbinkremente der entsprechenden Farbkomponenten mit den gewonnenen Retuschefaktoren und

e) Erzeugen der retuschierten Farbwerte (Y' bzw. M', C', K') durch bildpunktweises Addieren von Farbwerten und ortsmäßig zugeordneten Korrekturwerten.

Vorteilhafte Weiterbildungen des Verfahrens sind in den Unteransprüchen angegeben.

Nach dem angegebenen Verfahren wird der Koordinatenstift eines Koordinaten-Erfassungsgerätes sowohl zur Bestimmung des Ortes der Retusche als auch gleichzeitig zur Bestimmung der Retuschestärke verwendet. Auf diese Weise kann der Retuscheur, der gewohnt ist, mit dem Retuschepinsel zu arbeiten, den Koordinatenstift ebenfalls wie einen konventionellen Retuschepinsel benutzen, wodurch in vorteilhafter Weise insbesondere beliebige graduelle Änderungen und Farbverläufe erzielt werden.

Eine vorteilhafte Anordnung zur Durchführung des Verfahrens ist durch folgende Baugruppen gekennzeichnet :

a) Einen Farb-Geber (38) für die Farbinkremente ($\Delta Y$ bzw. $\Delta M$, $\Delta C$, $\Delta K$) der einzelnen Farbkomponenten ;

b) eine Eingabe-Stufe (37), die an den Farb-Geber (38) angeschlossen ist ;

c) eine Auswerte-Schaltung (48) für die erfaßten Ortskoordinaten-Paare (x, y), welche an das Koordinaten-Erfassungsgerät (50, 52) angeschlossen ist, zur gleichzeitigen Gewinnung eines Retuschefaktors (r) für jedes erfaßte Ortskoordinaten-Paar (x, y) mit der Markier-Vorrichtung (51) ;

d) einen Retusche-Speicher (49), welcher an die Auswerte-Schaltung (48) angeschlossen ist, zur Ablage der Retuschefaktoren (r) ;

e) eine Korrekturwertstufe (40), welche mit dem Retusche-Speicher (49) und dem Farb-Geber (38) in Verbindung steht, zur Bildung von Korrekturwerten ($Y_R$ bzw. $M_R$, $C_R$, $K_R$) für die einzelnen Farbkomponenten aus dem Retuschefaktor (r) und den Farbinkrementen und durch

f) Verknüpfungsstufen (15, 16, 17, 18), welche an den Bildwiederholspeicher (7), den Farbmonitor (2) und an die Korrekturwert-Stufe (40) angeschlossen sind, zur Änderung der Farbwerte (Y bzw. M, C, K) durch die Korrekturwerte.

## Kurze Beschreibung der Zeichnungen

Die Erfindung wird im folgenden anhand der Figuren 1 bis 14 näher erläutert. Es zeigen

Figur 1 eine Schaltungsanordnung zur partiellen elektronischen Retusche bei der Farbbildreproduktion,
Figur 2 ein Flußdiagramm zur Wirkungsweise der Einrichtung,
Figur 3 grafische Darstellungen zur Ermittlung der Retuschefaktoren,
Figur 4 eine mit dem Koordinatenstift erfaßte Retuschefläche,
Figur 5 ein Flußdiagramm zur Koordinatenerfassung,
Figur 6 grafische Darstellungen zur Erläuterung von Retuschefunktionen,
Figur 7 Flußdiagramme zur Erläuterung von Retuschefunktionen,
Figur 8 eine Weiterbildung der Schaltungsanordnung,
Figur 9 ein Ausführungsbeispiel für ein Speichersteuerwerk,
Figur 10 ein Ausführungsbeispiel für einen Korrekturwert-Geber,
Figur 11 ein Ausführungsbeispiel für einen Retusche-Geber,
Figur 12 ein weiteres Ausführungsbeispiel für einen Retusche-Geber,
Figur 13 ein Ausführungsbeispiel des Retusche-Gebers mit Masken-Speicher,
Figur 14 eine Variante der Schaltungsanordnung.

## Bester Weg zur Ausführung des Erfindung

Fig. 1 zeigt den prinzipiellen Aufbau einer Schaltungsanordnung zur partiellen elektronischen Retusche (Retuscheplatz) bei der elektronischen Farbbildreproduktion und Fig. 2 ein zugehöriges Flußdiagramm.

Ein Speichermedium 1 (Magnetband ; Magnetplatte) enthält im Ausführungsbeispiel die bereits in einem Farbscanner korrigierten digitalen Farbwerte für die Farbauszüge « Gelb » (Y), « Magenta » (M), « Cyan » (C) und « Schwarz » (K) eines zu reproduzierenden Bildes. Die Farbwerte mögen beispielsweise eine Wortlänge von 8 Bit haben, womit zwischen « Schwarz » (O) und « Weiß » (255) 254 Graustufen unterschieden werden.

Das zu reproduzierende Bild kann sowohl ein Einzelbild als auch eine montierte Druckseite sein. Die Farbwerte eines Einzelbildes wurden zuvor in einem Farbscanner durch punkt- und zeilenweise trichromatische Abtastung einer Vorlage, durch Farbkorrektur und Analog-Digital-Wandlung der Farbauszugssignale gewonnen. Die Farbwerte einer ganzen Druckseite entstanden beispielsweise in einer Einrichtung zur elektronischen Seitenmontage nach der GB-PS 14 07 4 87 (DE-OS 21 61 038) durch Kombination der korrigierten Einzelbild-Farbwerte nach einem Layout-Plan. In dem Speichermedium 1 können aber auch unkorrigierte Farbwerte abgelegt sein.

Vor der Aufzeichnung der Farbauszüge auf Filmmaterial mittels eines Farbscanners (Offsetdruck) oder vor der Herstellung der Druckformen mittels einer Graviermaschine (Tiefdruck) sollen die zu reproduzierenden Bilder bzw. Farbwerte einer partiellen elektronischen Retusche unter Sichtkontrolle unterzogen werden, um die im Farbscanner vorgenommene Farbkorrektur zu optimieren und/oder um nachträgliche Änderungswünsche der Auftraggeber zu berücksichtigen.

Für die Sichtkontrolle ist ein Farbmonitor 2 vorhanden, auf dessen Bildschirm 3 ein Bild aus 512 × 512 Bildpunkten aufgezeichnet werden kann. Die zur Darstellung des zu reproduzierenden Bildes oder eines entsprechenden Bildausschnittes benötigten Farbwerte werden mittels eines Prozeßrechners 4 aus dem gesamten Datenbestand des Speichermediums 1 ausgewählt oder berechnet und von dort Bildpunkt für Bildpunkt über die Daten-Busse 5 und 6 in einen Bildwiederholspeicher 7 übertragen. Der Bildwiederholspeicher 7 weist dementsprechend für jeden Farbauszug eine Kapazität von 512 × 512 Speicherplätzen à 8 Bit auf.

Zur Erzeugung eines Standbildes auf dem Bildschirm 3 des Farbmonitors 2 ruft ein Speichersteuerwerk 8 über einen Adreß-Bus 9 die X/Y-Adressen des Bildwiederholspeichers 7 zyklisch auf. Figur 9 zeigt ein Ausführungsbeispiel für ein Speichersteuerwerk.

Die gespeicherten digitalen Farbwerte F [Y, M, C, K] werden mit einem Lesetakt auf einer Leitung 10 Zeile für Zeile und innerhalb jeder Zeile Bildpunkt für Bildpunkt ausgelesen und über Datenleitungen 11, 12, 13 und 14 auf digitale Verknüpfungsstufen 15, 16, 17 und 18 gegeben, die im Ausführungsbeispiel als digitale Addierstufen ausgebildet sind.

In den digitalen Addierstufen 15, 16, 17 und 18, die beispielsweise als Zweierkomplement-Addierer ausgeführt sind, werden den ausgelesenen digitalen Farbwerten F entsprechend der gewünschten Retusche digitale Korrekturwerte $F_R$ [$Y_R$, $M_R$, $C_R$, $K_R$] hinzugefügt (Positivretusche) oder von diesen abgezogen (Negativretusche), um die retuschierten digitalen Farbwerte F' [Y', M', C', K'] zu erhalten.

Die mit einem Vorzeichen behafteten Korrekturwerte $F_R$ werden in einer Korrekturschaltung 19 erzeugt. Alternativ könnten die Vorzeichen entfallen und stattdessen in der Korrekturschaltung 19 entsprechende Steuersignale erzeugt werden, welche die Addierstufen auf Additon oder Subtraktion umschalten.

Die retuschierten digitalen Farbwerte F' gelangen über einen Daten-Bus 20 und einen Lichtmarken-Generator 21 auf einen D/A-Wandler 22 und werden dort in vier analoge Farbauszugssignale umgewandelt. Ein nachgeschalteter Drucknachbildungsrechner 23 formt die vier Farbauszugssignale unter Berücksichtigung der Parameter des späteren Mehrfarbendruckes derart in die drei Ansteuersignale r, g und b für den Farbmonitor 2 um, daß die Darstellung auf dem Bildschirm 3 denselben farblichen Eindruck vermittelt wie der Mehrfarbendruck selbst. Ein derartiger Drucknachbildungsrechner ist z. B. ausführlich in der GB-PS 15 40 525 (DE-OS 26 07 623) beschrieben.

Die Aufzeichnung erfolgt nach dem Zeilensprungverfahren, um ein flimmerfreies Bild zu erhalten. Ein Taktgenerator 24 erzeugt nach der beim Fernsehen üblichen Technik die zur Bildaufzeichnung benötigten horizontalen und vertikalen Ablenksignale (H ; V) auf Leitungen 25 und 26 und die Zeilenstart-Impulse (ZS) und Bildstart-Impulse (BS) auf Leitungen 27 und 28. Das Speichersteuerwerk 8 liefert über Leitungen 29 und 30 horizontale und vertikale Synchronimpulse an den Taktgenerator 24, so daß die Bildaufzeichnung mit dem Lesevorgang aus dem Bildwiederholspeicher 7 synchronisiert ist.

Zur Markierung eines Bildpunktes oder Bildpunkt-Bereiches in dem dargestellten Farbbild wird eine Lichtmarke 31 in den Bildschirm 3 eingeblendet, die sich durch Vorgabe von X-Y-Koordinaten mittels eines mechanischen Koordinaten-Steuer-hebels 32 über eine Adressenleitung 33 verschieben läßt. In dem Speichersteuerwerk 8 werden die vorgegebenen Koordinaten (Adressen) mit den laufend aufgerufenen Adressen verglichen und bei Gleichheit ein Befehl « Lichtmarke » auf einer Leitung 34 erzeugt, der genau in dem Zeitpunkt erscheint, in dem die Elektronenstrahlen des Farbmonitors 2 den gewählten Bildpunkt oder Bildpunkt-Bereich auf der Bildschirmfläche überstreichen. Der Befehl « Lichtmarke » aktiviert den Lichtmarken-Generator 21, der kurzzeitig gleiche r, g, b-Ansteuersignale für den Farbmonitor 2 erzeugt. Dadurch werden die Elektronenstrahl-Erzeugungssysteme des Farbmonitors 2 gleichzeitig mit derselben Leuchtdichte eingeschaltet und die « weiße » Lichtmarke 31 erzeugt.

Mit Hilfe der Lichtmarke 31 kann auf dem Bildschirm 3 ein Meßbereich innerhalb einer Farbe definiert werden, deren zugehörige Farbwerte ermittelt werden sollen. Dazu ist an den Daten-Bus 20 ein Meßwert-Speicher 35 angeschlossen, dessen Schreibeingang 36 ebenfalls mit dem Befehl « Lichtmarke » auf der Leitung 34 beaufschlagt wird. Auf diese Weise können die gleichzeitig mit der Lichtmarke 31 auf dem Daten-Bus 20 erscheinenden retuschierten Farbwerte F' oder, im Falle, daß die Korrekturwerte $F_R$ zu Null gemacht sind, auch die aus dem Bildwiederholspeicher 7 ausgelesenen unretuschierten Farbwerte F in den Meßwert-Speicher 35 eingeschrieben werden.

Im folgenden soll die Korrekturschaltung 19, die im wesentlichen aus einer Eingabestufe 37, einem Farb-Geber 38, einem Retusche-Geber 39 und einem Korrekturwert-Geber 40 besteht, beschrieben werden.

Für jeden Bildpunkt mit den Koordinaten x und y setzt sich der ortsabhängige Korrekturwert $F_R$ (x, y) nach der Gleichung :

$$F_R\ (x,\ y) = \pm\ \Delta F \cdot r\ (x,\ y) \qquad (1)$$

aus einem ortsunabhängigen Farbinkrement ± ΔF [± ΔY ; ± ΔM ; ± ΔC ; ± ΔK] und einem allen Farbauszügen gemeinsamen, ortsabhängigen Retuschefaktor r (x, y) zusammen.

Danach ergeben sich für die einzelnen Farbauszüge folgende Gleichungen :

$$\begin{aligned} Y_R\ (x,\ y) &= \pm\ \Delta Y \cdot r\ (x,\ y) \\ M_R\ (x,\ y) &= \pm\ \Delta M \cdot r\ (x,\ y) \\ C_R\ (x,\ y) &= \pm\ \Delta C \cdot r\ (x,\ y) \\ K_R\ (x,\ y) &= \pm\ \Delta K \cdot r\ (x,\ y) \end{aligned} \qquad (2)$$

Die Farbinkremente ΔF stellen die jeweils kleinsten zu addierenden oder zu subtrahierenden Korrekturwerte $F_R$ für die Farbwerte der Bildpunkte dar und werden in dem Farb-Geber 38 gewonnen.

Der Retuschefaktor r eines Bildpunktes ist der Multiplikator, mit dem das betreffende Farbinkrement ΔF zu multiplizieren ist, um den Korrekturwert $F_R$ für diesen Bildpunkt zu erhalten. Der Retuschefaktor r wird in dem Retusche-Geber 39 erzeugt.

Die einzelnen Komponenten der Korrekturschaltung 19 sollen nun näher erläutert werden.

## Eingabestufe 37

Die Eingabestufe 37 weist drei Tastenfelder 37′, 37″ und 37‴ auf. Im Tastenfeld 37′ sind vier Farbauszug-Tasten « Y », « M », « C » und « K » vorhanden, mit denen bei einer Auszugs-Retusche der zu retuschierende Farbauszug ausgewählt wird. Ein Befehl « Farbauszug » auf einer Leitung 41 sorgt dafür, daß von dem Korrekturwert-Geber 40 nur der betreffenden Korrekturwert $Y_R$ bzw. $M_R$, $C_R$, oder $K_R$ zu der Addierstufe durchgeschaltet wird.

Im Falle der Auszugs-Retusche wird der ausgewählte Farbauszug zur Sichtkontrolle auf dem Bildschirm 3 des Farbmonitors 2 in Schwarz/Weiß dargestellt. In dem Drucknachbildungsrechner 23 befindet sich ein nicht dargestellter Umschalter, der von dem Befehl « Farbauszug » auf der Leitung 41 betätigt wird. Der Umschalter legt die betreffenden Farbauszugssignale gleichzeitig an alle Farbkanäle oder auf den Schwarzkanal. Dabei ist Sorge getragen, daß die drei Ansteuersignale für den Farbmonitor 2 betragsmäßig gleich groß sind.

Die Darstellung des zu retuschierenden Farbauszugs kann auch auf einem Schwarz/Weiß-Monitor erfolgen. Sollen die Retuscheergebnisse an allen Farbauszügen gleichzeitig beurteilt werden, lassen sich auch mehrere Monitore einsetzen. Nach wie vor kann das Farbbild zusätzlich auf einem Farbmonitor dargestellt werden, um den Einfluß der einzelnen Auszugsretuschen am Gesamtbild zu beobachten. Wird keine der Farbauszug-Tasten gedrückt, sind automatisch vier Korrekturwerte $F_R$ für eine Farbretusche wirksam.

Im Tastenfeld 37″ ist eine Zehner-Tastatur angeordnet, mit der die entsprechenden Farbanteile einer Farbe f wertemäßig eingegeben werden können. Das Tastenfeld 37‴ weist eine Vielzahl von Betriebs-Tasten auf, mit denen verschiedene Funktionen der Korrekturschaltung 19 aktiviert werden können, was noch im einzelnen erläutert wird.

## Farb-Geber 38

In dem Farb-Geber 38 werden die vier Farbinkremente F aus einer Zielfarbe f′ (Retuschefarbe) oder aus der Differenz zwischen einer Anfangsfarbe f und einer Zielfarbe f′ ermittelt. Die Anfangsfarbe f ist diejenige Farbe in dem zu retuschierenden Bild, von der die Retusche ausgehen soll. Die Farbkomponenten der Anfangsfarbe f werden durch eine bereits erläuterte Farbmessung in dem dargestellten Farbbild mit Hilfe des Meßwert-Speichers 35 bestimmt und über einen Daten-Bus 42 an den Farb-Geber 38 übermittelt.

Die Zielfarbe f′ ist diejenige Farbe, die bei der Retusche erreicht werden soll. Die Farbanteile der gewünschten Zielfarbe f′ können mittels der Farbauszug-Tasten des Tastenfeldes 37′ und der Zehner-Tastatur des Tastenfeldes 37″ über einen weiteren Daten-Bus 43 in den Farb-Geber 38 eingegeben oder aber durch eine Farbmessung im Farbbild bestimmt werden.

Die in dem Farb-Geber 38 mit richtigem Vorzeichen berechneten Farbinkremente $\pm\ \Delta F(+ \triangleq$ Positivretusche ; $- \triangleq$ Negativretusche) werden über Datenleitungen 44 bis 47 an den Korrekturwert-Geber 40 weitergeleitet. Die Ermittlung der Farbinkremente $\pm\ \Delta F$ wird später an einigen Beispielen erläutert. Als Farb-Geber 38 kann ein Mikrocomputer eingesetzt werden.

## Retusche-Geber 39

Der Retusche-Geber 39 umfaßt ein Koordinaten-Erfassungsgerät für die Koordinaten (x, y) der zu retuschierenden Bildpunkte, eine Auswerte-Schaltung 48 zur Berechnung der ortsabhängigen Retuschefaktoren r (x, y) und einen Retusche-Speicher 49.

Das Koordinaten-Erfassungsgerät besteht im Ausführungsbeispiel aus einem Digitalisiertablett 50, einem handgeführten Koordinatenstift 51 oder irgendeiner anderen Markiervorrichtung und einer Meßstufe 52 zur Koordinatenbestimmung der von dem Koordinatenstift 51 berührten Punkte auf dem Digitalisiertablett 50.

Derartige Koordinaten-Erfassungsgeräte sind im Handel erhältlich (z. B. Firma Summagraphics, 35 Brentwood Ave., Fairfield USA) und dem Fachmann bekannt, so daß sich eine detaillierte Beschreibung erübrigt.

Es kann aber auch jedes andere Koordinaten-Erfassungsgerät (z. B. Koordinaten-Hebel ; Rollkugel usw.) oder, falls eine geringe Genauigkeit zulässig ist, auch ein herkömmlicher Lichtgriffel Verwendung finden.

Bei dem Koordinaten-Erfassungsgerät des Ausführungsbeispiels werden die Koordinaten der Bildpunkte mit einer wesentlich höheren Auflösung ermittelt als die Auflösung des gespeicherten und dargestellten Bildes aus 512 x 512 Bildpunkten, wodurch eine hohe Genauigkeit erzielbar ist. Die im Koordinaten-Erfassungsgerät gemessenen Koordinaten werden in der Meßstufe 52 auf die möglichen 512 x 512 Koordinaten (= Adressen) der Bildpunkte umgerechnet und über einen Adreß-Bus 53 ausgegeben.

Für die Kontrolle der Retusche ist die Bewegung des Lichtpunktes 31 auf dem Bildschirm 3 mit der Bewegung des Koordinatenstiftes 51 auf dem Digitalisiertablett 50 synchronisiert. Dazu werden die in dem Koordinaten-Erfassungsgerät gemessenen Koordinaten bzw. Adressen über den Adreß-Bus 53 an das Speichersteuerwerk 8 übermittelt und dort mit den zyklisch aufgerufenen Adressen des Bildwiederholspeichers 7 verglichen. Bei Adressengleichheit entsteht wiederum der Befehl « Lichtmarke » auf der Leitung 34, und der Lichtmarken-Generator 21 erzeugt, wie bereits beschrieben, die bewegliche Lichtmarke 31 auf dem Bildschirm 3.

Zur Ermittlung der Retuschefaktoren r (x, y) für jeden zu retuschierenden Bildpunkt mit den Koordinaten x und y wird der Koordinatenstift 51 vom Bediener erfindungsgemäß als « Retuschepinsel » benutzt und in nebeneinanderliegenden Linien mehrmals über den Bereich des Digitalisiertabletts 50 geführt, der dem zu retuschierenden Bildbereich entspricht, wobei in dem gewählten Ausführungsbeispiel die Anzahl der Überstreichungen pro Bildpunkt ein Maß für den gewünschten Retuschebetrag in diesem Bildpunkt ist.

Die Koordinaten x und y der von dem Koordinatenstift 51 berührten oder überfahrenen Punkte werden laufend über den Adreß-Bus 53 an die Auswerte-Schaltung 48 übermittelt und dort in einem Arbeitsspeicher listenmäßig festgehalten. Die Kapazität des Arbeitsspeichers ist so groß, daß z. B. die Koordinaten-Paare der letzten 100 oder 200 Berührungspunkte abgelegt werden können. Die Auswerteschaltung 48 kann z. B. ein Mikrocomputer sein.

Um die Ermittlung der Retuschefaktoren zu verdeutlichen, zeigt Figur 3a einen Ausschnitt aus dem Digitalisiertablett 50. Von einem bestimmten Zeitpunkt an, der z. B. durch die Austastlücke der Bildaufzeichnung gekennzeichnet ist, möge der Koordinatenstift 51 vom Punkt $P_1$ (2, 3) über den Punkt $P_4$ (6, 1) zurück zum Punkt $P_7$ (2, 3) eine Hin- und Herbewegung ausgeführt haben. Die Punkte P markieren jeweils den Zeitpunkt einer Koordinaten-Erfassung in der Meßstufe 52.

Figur 3b zeigt die Liste der berührten Koordinaten-Paare in der Reihenfolge der Berührungen. Das Ende einer Austastlücke sei durch einen Pfeil A und der Beginn der folgenden Austastlücke durch einen Pfeil B markiert.

Die ermittelten Retuschefaktoren werden in der Austastlücke in den Retusche-Speicher 49 überschrieben. Dazu zeigt Figur 3c den entsprechenden Ausschnitt des Retusche-Speichers 49 mit einer momentanen, ortsmäßigen Verteilung der ermittelten Retuschefaktoren r vor der Austastlücke A.

Mit Beginn der durch den Pfeil B markierten Austastlücke der Bildaufzeichnung wird das erste Koordinaten-Paar (2, 3) in der Liste aufgerufen und über einen Adreß-Bus 54 die zugehörige Adresse (2, 3) des Retusche-Speichers 49 angewählt. Der unter dieser Adresse gespeicherte Retuschefaktor r wird über einen Daten-Bus 55 ausgelesen, um einen bestimmten Betrag, z. B. um « 1 » (Verstärkung der Retusche) erhöht oder um « 1 » erniedrigt (Rücknahme der Retusche) und über den Daten-Bus 55 wieder in den Retusche-Speicher 49 zurückgeschrieben. In dem gewählten Beispiel wird eine Verstärkung der Retusche angenommen, so daß der entsprechende Retuschefaktor « 15 » um « 1 » auf « 16 » erhöht und zurückgeschrieben wird.

Dann werden nacheinander die folgenden Koordinaten-Paare in der Liste aufgerufen und die beschriebenen Maßnahmen sinngemäß durchgeführt. Nachdem die Retuschefaktoren in den Retusche-Speicher 49 überschrieben sind, wird der Arbeitsspeicher der Auswerte-Schaltung 48 gelöscht.

Entsprechend der angenommenen 512 x 512 Bildpunkte des Farbbildes hat der gesamte Retusche-Speicher 49 eine Kapazität von 512 x 512 x 8 Bit, so daß pro Bildpunkt (Koordinaten-Paar) 255 Berührungen des Koordinatenstiftes 51 gezählt und gespeichert werden können.

Die Austastlücke der Bildaufzeichnung wird vom Speicher-Steuerwerk 8 über eine Leitung 56 an die Auswerte-Schaltung 48 signalisiert. Während der Bildaustastung ist das Auslesen der Retuschefaktoren r aus dem Retusche-Speicher 49 unterbrochen. Die Art der Überschreibung hat den Vorteil, daß Retuscheänderungen bereits im neuen Bild sichtbar werden, ohne daß die Bilddarstellung selbst durch den Retuschevorgang gestört wird.

Über den gemeinsamen Adreß-Bus 9 werden die Adressen des Bildwiederholspeichers 7 und des Retusche-Speichers 49 zyklisch und synchron aufgerufen, wodurch ortsmäßig zugeordnete digitale Farbwerte F und Retuschefaktoren r gleichzeitig ausgelesen werden.

Dadurch, daß der Koordinatenstift 51 vom Bediener nach dem Erfindungsgedanken sowohl zur Koordinatenerfassung als auch zur Bestimmung der Änderungsbeträge verwendet wird, können im Sinne der konventionellen Pinselretusche in vorteilhafter Weise beliebige graduelle Änderungen und Farbverläufe erzielt werden. Da die manuelle Führung des Koordinatenstiftes der des herkömmlichen Retuschepinsels entspricht, kann der Retuscheur, der gewohnt ist, mit dem Retuschepinsel zu arbeiten, ohne Umlernprozeß die erfindungsgemäße elektronische Retusche ausführen.

Zur Festlegung einer zu retuschierenden Bildstelle durch den Bediener ist es nicht erforderlich, eine mit dem Endformat übereinstimmende Vorlage, einen Layout-Plan oder einen Kontrolldruck auf das Digitalisiertablett 50 passergerecht aufzuspannen, da dem Bediener die gewünschte Bildstelle durch die synchronisierte Lichtmarke 31 auf dem Bildschirm 3 angezeigt wird. Dadurch kann die Anfertigung einer im Endformat übereinstimmenden Vorlage oder eines Kontrolldruckes in vorteilhafter Weise entfallen.

Zur weiteren Arbeitserleichterung könnte das dargestellte Bild auf das Digitalisiertablett projiziert werden. Ebenso wäre es denkbar, ein transparentes Digitalisiertablett zu verwenden und den Farbmonitor 2 unter dem Digitalisiertablett anzuordnen.

In vorteilhafter Weise können die Retuschefaktoren auch aus dem mechanischen Druck ermittelt werden, mit dem der Koordinatenstift 51 auf das Digitalisiertablett 50 gedrückt wird. Ein Ausführungsbeispiel für den Retusche-Geber 39 zeigt Fig. 11.

Bevorzugt können die Retuschefaktoren für die zu retuschierenden Bildpunkte auch aus der Verweildauer des Koordinatenstiftes 51 auf den entsprechenden Punkten des Digitalisiertabletts 50 ermittelt werden bez. aus der Zeitdauer, für die eine Taste der Eingabe-Stufe 37 gedrückt wird, während der Koordinatenstift 51 die entsprechenden Punkte berührt. Dazu zeigt Figur 12 ein Ausführungsbeispiel des Retusche-Gebers. 39.

Es liegt im Rahmen der Erfindung, auf eine Darstellung des zu retuschierenden Farbbildes auf dem Bildschirm 3 des Farbmonitors 2 zu verzichten, falls doch eine Vorlage, ein Kontrolldruck oder dergleichen vorhanden ist. Der zu retuschierende Bildbereich wird dann anhand der auf das Digitalisiertablett 50 aufgespannten Vorlage festgelegt und die erzielte Retuschewirkung z. B. an einem Meßinstrument kontrolliert.

Korrekturwert-Geber 40

Die aus dem Retusche-Speicher 49 ausgelesenen Retuschefaktoren r werden über einen Daten-Bus 57 an den Korrekturwert-Geber 40 gegeben, in welchen sie nach den angegebenen Gleichungen mit den in dem Farb-Geber 38 ermittelten Farbinkrementen F für die einzelnen Farbauszüge multipliziert werden, um die Korrekturwerte $F_R$ zu erhalten.

Im Ausführungsbeispiel besteht der Korrekturwert-Geber 40, wie in Figur. 8 dargestellt, aus vier Multiplizierern. Der Korrekturwert-Geber 40 kann aber auch Tabellen-Speicher enthalten. Figur 10 zeigt ein Ausführungsbeispiel mit Tabellen-Speichern.

Die in dem Korrekturwert-Geber 40 berechneten Korrekturwerte $F_R$ werden über Datenleitungen 58, 59, 60 und 61 an die digitalen Addierstufen 15, 16, 17 und 18 in den einzelnen Farbkanälen übermittelt.

Zweckmäßiger Weise wählt man die Farbinkremente F, die mit einer Überstreichung hinzuaddiert oder abgezogen werden, so groß, daß die Dichteänderung in dem Farbbild unter der sichtbaren Schwelle liegt. Erst die Summe von Bewegungen des Koordinatenstiftes 51 führt zu einer erkennbaren Tonwertänderung, wodurch eine Einzelbewegung nicht erkennbar ist. Dazu werden die Farbinkremente $\Delta F$ kleiner als die Wertigkeit des niedrigstwertigen Bits der in dem Bildwiederholspeicher 7 abgelegten digitalen Farbwerte F gewählt, z. B. als Vielfaches vom 1/256 dieser Wertigkeit. Die Korrekturwerte $F_R$ werden auf ganze Zahlen auf- bzw. abgerundet, bevor sie den Addierern zugeführt werden. Dies hat den Vorteil, daß sich die Retusche sehr feinstufig ausführen läßt.

Wie bereits erwähnt, weist die Eingabestufe 37 ein Tastenfeld 37''' mit einer Anzahl von Betriebs-Tasten auf, mit denen in der Anordnung verschiedene Funktionen vor, während und nach der Retusche angewählt werden können. Diese Funktionen sollen nun im einzelnen erläutert werden.

Positivretusche ; Negativretusche

Mit den Betriebs-Tasten « Positivretusche » und « Negativretusche » bestimmt der Bediener, ob in den einzelnen Farbkanälen eine Positivretusche oder eine Negativretusche durchgeführt werden soll. Ein entsprechendes Steuersignal auf einer Mehrfachleitung 62 sorgt dafür, daß die Farbinkremente $\Delta F$ mit richtigen Vorzeichen aus dem Farb-Geber 38 ausgegeben werden.

Anfangsfarbe ; Zielfarbe

Mit den Betriebs-Tasten « Anfangsfarbe » und « Zielfarbe » legt der Bediener fest, ob die in dem Farb-Geber 38 eingegebenen Farbanteile zur Berechnung der Farbinkremente $\Delta F$ als Anfangsfarbe oder als Zielfarbe zu werten sind, was ebenfalls über die Mehrfachleitung 62 an den Farb-Geber 38 signalisiert wird. Wird sowohl eine Anfangsfarbe als auch eine Zielfarbe definiert, erfolgt die Vorzeichenbestimmung für die Farbinkremente $\Delta F$ (Positivretusche ; Negativretusche) automatisch durch die Differenzbildung zwischen Zielfarbe und Anfangsfarbe, so daß die entsprechenden Betriebs-Tasten nicht betätigt werden müssen.

Farbmessung

Zur Einleitung der bereits beschriebenen Farbmessung drückt der Bediener eine Betriebs-Taste « Messen », mit welcher der Meßwert-Speicher 35 über eine Leitung 63 aktiviert wird.

Betragsmäßige Auflösung

Die betragsmäßige Auflösung bei der Retusche kann durch die Größe der Farbinkremente $\Delta F$ geändert werden.

Sind die größten Korrekturwerte $F_R$ (End-Korrekturwerte), die bei einer Retusche erreicht werden müssen, z. B. aus einer Farbdifferenzmessung zwischen einer Zielfarbe und einer Anfangsfarbe bekannt und sollen diese End-Korrekturwerte $F_R$ mit N Berührungen erreicht werden, so ergeben sich die erforderlichen Farbinkremente $\Delta F$ als Quotienten aus den End-Korrekturwerten $F_R$ und der Zahl « N ».

Die Zahl « N » wird mit Hilfe der Zehner-Tastatur des Tastenfeldes 37'' über den Daten-Bus 43 unter gleichzeitigem Drücken der Betriebs-Taste « Retuschefeinheit » in den Farb-Geber 38 zur Berechnung der Farbinkremente ΔF eingegeben, wodurch ein entsprechendes Steuersignal auf der Mehrfachleitung 62 ausgelöst wird.

Im Ausführungsbeispiel wird die größte Auflösung dann erreicht, wenn N = 255 entsprechend der maximal zu registrierenden Anzahl von Berührungen gewählt wird.

Flächenmäßige Auflösung

Die feinste flächenmäßige Auflösung, die mit dem Koordinaten-Erfassungsgerät erzielt werden kann, beträgt einen Bildpunkt. Um größere Flächen schneller retuschieren zu können, kann die Anzahl der mit jeder Berührung des Koordinatenstiftes 51 erfaßten Bildpunkte vergrößert werden. In diesem Fall wird in der Auswerte-Schaltung 48 nicht nur der Retuschefaktor r des mit dem Koordinatenstift 51 berührten Bildpunktes, sondern auch die Retuschefaktoren r der diesen Bildpunkt umgebenden Bildpunkte verändert, wodurch die Retuschefläche, d. h. gewissermaßen die « Fläche des Retuschepinsels » vergrößert ist. Die Retuschefläche kann beispielsweise rechteckförmig oder kreisförmig gewählt werden.

Zur Vergrößerung der Retuschefläche betätigt der Bediener eine Betriebs-Taste « Retuschefläche », womit ein Steuersignal über eine Mehrfachleitung 64 an die Auswerte-Schaltung 48 gegeben wird. In diesem Falle akzeptiert die Auswerte-Schaltung 48 nur dann neue Koordinaten, wenn sie von den zuletzt übernommenen Koordinaten in X- oder Y-Richtung um eine Mindestdistanz « d » abweichen. Die Mindestdistanz « d » wird so gewählt, daß sich nebeneinanderliegende Bewegungen des Koordinatenstiftes 51 und damit die entsprechenden Änderungen im Farbbild nicht überlappen.

Größe und Form der Retuschefläche wird dem Bediener auf dem Bildschirm 2 des Farbmonitors 3 durch eine entsprechend geformte und vergrößerte Lichtmarke 31 angezeigt.

Zur Verdeutlichung zeigt Figur 4 die Anordnung der jeweils gleichzeitig retuschierten Bildpunkte bei einer vergrößerten Retuschefläche 65, die beispielsweise aus 3 × 3 Bildpunkten 66 besteht. Die Linie 67 deutet eine beliebige Bewegung des Koordinatenstiftes 51 an. In Figur 5 ist das zugehörige Flußdiagramm dargestellt.

Retuschemaske

Häufig muß die Retusche auf einen scharf begrenzten Bereich des Bildes beschränkt werden. Dies ist zum Beispiel beim Ineinanderkopieren von Bildern der Fall, wenn der zu retuschierende Bildbereich an ein unverändert zu übernehmendes, einkopiertes Bild grenzt. In der Regel gelingt es nicht, die Retuschewirkung durch eine exakte Führung des Koordinatenstiftes bildpunktgenau auf den betreffenden Bildbereich zu begrenzen. Diese Arbeit wird in vorteilhafter Weise erleichtert, wenn die Korrektur durch eine elektronisch erzeugte Retuschemaske automatisch begrenzt wird, wodurch das sorgfältige Umfahren des Retuschebereiches mit dem Koordinatenstift entfällt. Figur 13 zeigt ein weiteres Ausführungsbeispiel eines Retusche-Gebers, mit dem eine solche Retuschemaske erzeugt wird.

Darstellung des Originals

Zur Beurteilung des Farbbildes in einem beliebigen Stadium der Retusche ist es vorteilhaft, kurzzeitig das unretuschierte Originalbild auf dem Bildschirm 3 des Farbmonitors 2 aufzuzeichnen. Dazu drückt der Bediener die Betriebs-Taste « Original » der Eingabestufe 37. Ein entsprechender Befehl auf einer Leitung 68 an den Korrekturwert-Geber 40 schaltet die Korrekturwerte $F_R$ von den Datenleitungen 58 bis 61 weg, wodurch die aus dem Bildwiederholspeicher 7 ausgelesenen Farbwerte F des Originals ohne Beeinflussung durch die Korrekturwerte $F_R$ aufgezeichnet werden.

Rücknahme der Retusche

War die Retusche zu stark, kann sie wieder abgeschwächt werden, indem der Bediener zunächst eine Betriebs-Taste « Rücknahme » in der Eingabestufe 37 betätigt und dann mit Radierbewegungen des Koordinatenstiftes 51 über die betreffende Bildstelle fährt. In diesem Falle sorgt ein Befehl auf der Mehrfachleitung 64 dafür, daß die Retuschefaktoren r in der Auswerte-Schaltung 48 und entsprechend im Retusche-Speicher 49 um die erforderlichen Beträge erniedrigt werden.

Ist die Löschung der Retuschewirkung einer oder mehrerer Bewegungen des Koordinatenstiftes 51 gewünscht, wird in der Auswerte-Schaltung 48 in zweckmäßiger Weise die gespeicherte Liste von Koordinaten-Paaren und zugeordneten Retuschefaktoren rückwärts abgearbeitet, wodurch ohne erneute Bewegung des Koordinatenstiftes die Retusche konturengenau zurückgenommen wird.

Löschung der Retusche

Die gesamte Retusche kann rückgängig gemacht werden, indem der Inhalt des Retusche-Speichers 49 gelöscht wird. Dazu drückt der Bediener eine Betriebs-Taste « Löschen » in der Eingabestufe 37, und ein entsprechender Befehl auf einer Leitung 69 löscht den Speicherinhalt.

Ist die Retusche eines Teilbereiches abgeschlossen oder möchte man neue Anfangsbedingungen in die Schaltung eingeben, werden zuvor die retuschierten Farbwerte F' über den rückgeführten Daten-Bus 70 in den Bildwiederholspeicher 7 geladen, und eine neue Teilretusche kann beginnen.

Ist schließlich die gesamte Retusche des Farbbildes beendet, werden die retuschierten Farbwerte F' mittels des Prozeßrechners 4 auf das Speichermedium 1 zurückgeschrieben.

Um die Wirkungsweise der Anordnung nach Figur 1 noch näher zu erläutern, werden nachfolgend einige typische Retuschearbeiten, die mit dem Retuscheplatz durchführbar sind, anhand von grafischen Darstellungen und Flußdiagrammen erläutert. Auf der Abzisse sind die Retuschefaktoren r und auf der Ordinate Dichten D aufgetragen. Die Dichte $D_m$ entspricht dem maximalen Dichtewert von z. B. 1,7 bei Halbtonauszügen oder der Rasterpunkt-Größe 100 % bei gerasterten Auszügen. Die grafischen Darstellungen gelten jeweils für einen Bildpunkt in den betreffenden Farben.

a) Eine erste typische Retuschearbeit wird in der grafischen Darstellung der Fig. 6a und in einem Flußdiagramm in Fig. 7a) erläutert.

Eine definierte Retuschefarbe $f_R$, z. B. die Retuschefarbe « Braun », mit den Farbkomponenten $Y_R$, $M_R$, $C_R$ und $K_R$, soll auf einen Bildbereich mit einer neutralen Anfangsfarbe f (Grau ; Weiß) mit den Farbkomponenten Y, M, C und K aufgetragen werden. Der Bediener wird zunächst einer Farbtafel die Farbanteile der Retuschefarbe « Braun » entnehmen und mit Hilfe der Farbauszugs-Tasten des Tastenfeldes 37' und der Zenner-Tastatur des Tastenfeldes 37" in die Eingabestufe 37 eingeben.

Der Farb-Geber 38 ermittelt aus den vorgewählten Werten und der Zahl « N » anteilmäßig die Farbinkremente ΔF [ΔY ; ΔM ; ΔC ; ΔK]. Da die Retuschefarbe $f_R$ aufgetragen werden soll, handelt es sich um eine Positivretusche, und die Farbinkremente ΔF haben ein positives Vorzeichen.

Der Bediener führt dann den Auftrag der Retuschefarbe $f_R$ durch, indem er den Koordinatenstift 51 in Streichbewegungen über den Teil des Digitalisiertabletts 50 führt, der dem zu retuschierenden Bildbereich entspricht. Auf diese Weise werden den digitalen Farbwerten F der Anfangsfarbe f mit jeder Berührung bildpunktweise die entsprechenden Korrekturwerte $F_R$ hinzugefügt, bis nach N Berührungen auf dem Bildschirm 3 des Farbmonitors 2 die gewünschte Zielfarbe f' erreicht ist. Selbstverständlich kann der Auftrag der Retuschefarbe $f_R$ auch vor Erreichen der Zielfarbe f' abgebrochen oder teilweise rückgängig gemacht werden.

Die Retuschefarbe $f_R$ kann auch mittels einstellbarer Dichtegeber auf dem Bildschirm 3 des Farbmonitors 2 erzeugt werden. Ist die gewünschte Retuschefarbe $f_R$ gefunden, werden die zugehörigen, an den Dichtegebern ablesbaren Farbanteile über die Zehner-Tastatur eingegeben.

Die aufzutragende Retuschefarbe $f_R$ läßt sich aber auch durch Farbmessung im dargestellten Farbbild oder in den eingeblendeten Farbfeldern einer Farbtafel bestimmen. Auf diese Weise kann die in einem Bildbereich gemessene Retuschefarbe $f_R$ auf einen anderen Bildbereich des Farbbildes übertragen werden.

b) Eine andere typische Retuschearbeit wird anhand der grafischen Darstellung der Figur 6b und eines Flußdiagramms in Figur 7b erläutert.

Es soll ein verlaufender Farbübergang von einer Anfangsfarbe f mit den Farbkomponenten Y, M, C und K auf eine Zielfarbe f' mit den Karbkomponenten Y', M', C' und K' geschaffen werden, wobei z. B. bestimmte Bilddetails an eine Umgebungsfarbe graduell angeglichen oder schließlich gleichgestellt werden.

Anfangsfarbe f und Zielfarbe f' können wiederum durch eine Farbmessung in dem dargestellten Farbbild bestimmt werden. Die Zielfarbe f' kann aber auch durch die Zehner-Tastatur eingegeben werden. Aus den Differenzen der entsprechenden Farbkomponenten von Zielfarbe f' und Anfangsfarbe f und der Zahl werden wiederum die Farbinkremente F ermittelt und dann die Retusche durchgeführt. Nach N Überstreichungen mit dem Koordinatenstift 51 über den Bildpunkt, der zuvor die Anfangsfarbe f aufwies, hat dieser Punkt die Zielfarbe f' angenommen.

c) Bei einem Sonderfall, der aus der grafischen Darstellung der Figur 6c ersichtlich ist, sind Anfangsfarbe f und Zielfarbe f' jeweils eine Auszugsfarbe, so daß nur eine Farbkomponente geändert wird. Wird beispielsweise der Auszugsfarbe « Cyan » die Auszugsfarbe « Gelb » als Retuschefarbe graduell hinzugefügt, so bleibt zunächst die Ausgangsfarbe « Cyan » voll erhalten (Dichte $D_m$), und es entsteht die subtraktive, gesättigte Mischfarbe « Grün ». Bei Erreichen der gesättigten Farbe « Grün » und fortgesetzter Retusche behält die Auszugsfarbe « Gelb » ihren Maximalwert bei, und die Auszugsfarbe « Cyan » wird reduziert, so daß bei beendeter Retusche die Zielfarbe « Gelb » erreicht wird.

Zur Begrenzung der Farbanteile auf den Dichtewert $D_m$ werden z. B. begrenzende Addierer verwendet, welche den Addiervorgang auf einem Wert, der $D_m$ entspricht, festhalten, auch wenn das eigentliche Additionsergebnis größer ist.

d) Bisher wurden Beispiele für eine Farbretusche d. h. gleichzeitige Korrektur in allen Farbauszügen, beschrieben. Wie aber bereits erwähnt, können mit der Anordnung nach Figur 1 auch Auszugs-Retuschen durchgeführt werden.

Ein Beispiel, das anhand der grafischen Darstellung in Figur 6d und des Flußdiagramms der Figur 7d erläutert wird, ist das Retuschieren von Schattenpartien (Schwarzanteil K). Ein Teil einer Schattenpartie soll entfernt und durch eine Untergrundfarbe f' mit den Farbkomponenten Y', M', C' und K' (z. B. Braun) ersetzt werden.

Der Bediener betätigt dazu die Farbauszugs-Taste « K » des Tastenfeldes 37', wodurch die Korrekturen nur in den Farbwerten des Schwarzauszuges durchgeführt werden, und die Betriebs-Taste « Negativretusche » des Tastenfeldes 37‴.

Durch die Retusche wird dann der Schwarzanteil K des Schattens um den Korrekturwert $K_R$ auf den Schwarzanteil K' der Untergrundfarbe f' (Braun) reduziert. Der Endwert ergibt sich durch einen optischen Vergleich mit der im Farbbild vorhandenen Untergrundfarbe.

e) Eine weitere typische Retuschearbeit ist das Aufhellen und Abdunkeln, die anhand der grafischen Darstellung der Figur 6e und des Flußdiagramms der Figur 7e beschrieben wird.

Eine Farbe f mit den Farbanteilen Y, M, C und K kann durch Abziehen (Negativretusche) von Korrekturwerten $Y_R$, $M_R$, $C_R$ und $K_R$ bis zum Endpunkt « Weiß » aufgehellt oder durch Hinzufügen (Positivretusche) entsprechender Korrekturwerte $F_R$ weiter gesättigt — falls die Farbe nicht schon gesättigt ist — und bis zum Endpunkt « Schwarz » abgedunkelt werden.

Beim Abdunkeln mit dem Koordinatenstift 51 steigen zunächst die Farbanteile der Anfangsfarbe f prozentual an, bis der größte Farbanteil der Anfangsfarbe f, z. B. Y, die höchste Sättigung (Dichte $D_m$) im Punkt 73 erreicht, was bei einem Retuschefaktor r* der Fall sein möge. Bei fortgesetzter Positivretusche werden die Farbanteile Y, M und C auf die Werte begrenzt, die sie bei dem Retuschefaktor r* erreicht haben, und nur der Schwarzanteil K steigt mit geändertem Farbinkrement $\Delta K^*$ bis zum Endpunkt « Schwarz » an (Linie 74).

Falls die Anfangsfarbe f keinen Schwarzanteil aufweist (Dreifarbendruck), wird nur der größte Farbanteil der Anfangsfarbe f, der zuerst die Sättigung erreicht, auf den Dichtewert $D_m$ begrenzt und die anderen Farbanteile steigen bei fortgesetzter Retusche weiter an, bis auch sie den Dichtewert $D_m$ erreicht haben (Linie 75) ; womit die Anfangsfarbe f auf « Schwarz » abgedunkelt ist.

Figur 8 zeigt eine vorteilhafte Weiterbildung der Schaltungsanordnung nach Fig. 1, mit der insbesondere das in Figur 6e und Figur 7e beschriebene Aufhellen und Abdunkeln durchführbar ist. Aus der Figur 1 sind nur die zum Verständnis wichtigen Teile übernommen.

In der Anordnung weist der Retusche-Speicher 49 zwei Speichereinheiten 49' und 49" zu je 512 × 512 × 8 Bit auf, die gemeinsam an den Daten-Bus 54 und den Adreß-Bus 55 der Auswerte-Schaltung 48 angeschlossen sind. Zusätzlich ist eine Steuerstufe 76 vorhanden, deren Eingänge 77 über Datenleitungen 78, 79 und 80 mit den Ausgängen der Addierstufen 15, 16 und 17 in den Farbkanälen « Gelb », « Magenta » und « Cyan » verbunden sind. Die Ausgänge 81 der Steuerstufe 76 stehen über entsprechende Steuerungs-Busse 82 und 83 mit den Speichereinheiten 49' und 49" in Verbindung. Über die Datenleitungen 78, 79 und 80 werden die momentanen Werte der retuschierten Farbanteile Y', M' und C' an die Steuerstufe 76 gemeldet und dort mit einem Schwellenwert verglichen, welcher dem Dichtewert $D_m$ entspricht.

Der Korrekturwert-Geber 40 besteht beispielsweise aus Multiplizierstufen 40a, 40b, 40c und 40d, welche mit den in dem Farb-Geber 38 berechneten Farbinkrementen $\Delta Y$, $\Delta M$, $\Delta C$ und $\Delta K$ auf den Datenleitungen 44, 45, 46 und 47 beaufschlagt sind. Die Multiplizierstufen 40a, 40b und 40c, welche den Farbkanälen « Gelb », « Magenta » und « Cyan » zugeordnet sind, stehen außerdem über einen Daten-Bus 57' mit der Speichereinheit 49' und die dem Farbkanal « Schwarz » zugeordnete Multiplizierstufe 40d über einen weiteren Daten-Bus 57" mit der Speichereinheit 49" in Verbindung. In der Speichereinheit 49' werden die Retuschefaktoren der bunten Farbkomponenten und in der Speichereinheit 49" der Retuschefaktor für die Schwarzkomponente abgelegt, so daß eine unterschiedliche Auswertung erfolgen kann, da die Sättigung der einzelnen Bildpunkte zu unterschiedlichen Zeiten und bei einer unterschiedlichen Anzahl von Berührungen eintritt.

Während der Retusche werden zunächst die in der Auswerte-Schaltung 48 ermittelten Retuschefaktoren r parallel in beide Speichereinheiten 49' und 49" eingeschrieben. Sobald eine der Farbanteile Y, M' und C in einem Bildpunkt den Dichtewert $D_m$ erreicht, wird dies in der Steuerstufe 76 erkannt. Die Steuerstufe 76 setzt über den Steuerungs-Bus 82 in der Speichereinheit 49' z. B. das MSB des dem Bildpunkt zugeordneten Retuschefaktors r*, womit die Farbsättigung in dem Bildpunkt markiert und der entsprechende Retuschefaktor $r_K$ in der Speichereinheit 49" nicht verändert wird. Bei einer erneuten Berührung desselben Bildpunktes wird die « Sättigung » durch das MSB erkannt und der zugehörige Retuschefaktor nicht weiter erhöht, so daß die Farbanteile Y, M und C des Bildpunktes trotz fortgesetzter Bewegung des Koordinatenstiftes 51 konstant bleiben. Dagegen wird zum Abdunkeln der Retuschefaktor $r_K$ des Bildpunktes fortgesetzt erhöht und der Schwarzanteil bis zum Endpunkt « Schwarz » vergrößert.

Figur 9 zeigt ein Ausführungsbeispiel für das Speichersteuerwerk 8 in Fig. 1.

Das Speichersteuerwerk 8 enthält einen Taktgenerator 84, welcher eine Zähltaktfolge $T_0$ über einen Zähleingang 85 in einen X-Adreßzähler 86 einzählt. Der X-Adreßzähler 86 ist ein 9-Bit-Binärzähler und ruft über einen Adreß-Bus 9' die X-Adressen des Bildwiederholspeichers 7 von 0 bis 511 auf. Jeweils nach 511 gezählten Takten erscheint am Ausgang 87 des X-Adreßzählers 86 ein Takt $T_1$, der über einen Zähleingang 88 in einen Y-Adreßzähler 89 eingezählt wird. Der Y-Adreßzähler 89 ist ebenfalls ein 9-Bit-Binärzähler und ruft die entsprechenden Y-Adressen des Bildwiederholspeichers 7 von 0 bis 511 über einen Adreß-Bus 9" auf. Die Adreß-Busse 9' und 9" werden zu dem Adreß-Bus 9 vereinigt, der mit dem Bildwiederholspeicher 7 verbunden ist. Der Y-Adreßzähler 89 erzeugt an seinem Ausgang 90 ebenfalls nach 511 eingezählten Takten einen Takt $T_2$. Aus den Takten $T_1$ und $T_2$ werden die Zeilenstart-Impulse (ZS) und die Bildstart-Impulse (BS) auf den Leitungen 29 und 30 für die Bildaufzeichnung abgeleitet.

Die Adreß-Busse 9' und 9" stehen jeweils mit den ersten Vergleichseingängen 91 und 92 der Vergleicher 93 und 94 in Verbindung. Die zweiten Vergleichseingänge 95 und 96 der Vergleicher 93 und 94 sind mit X/Y-Koordinaten beaufschlagt, welche zur Verschiebung der Lichtmarke mittels des Koordinaten-Steuerhebels 32 vorgegeben werden können oder welche zur Synchronisierung der Lichtmarke 33 mit der Bewegung des Koordinatenstiftes 51 von der Meßstufe 52 erzeugt werden. Die Signalausgänge 97 und 98 der Vergleicher 93 und 94 sind über ein Und-Tor 99 miteinander verknüpft. Bei Gleichheit der Adressen erscheint auf der Leitung 34 das Signal « Lichtmarke ».

Figur 10 zeigt ein weiteres Ausführungsbeispiel für den Korrekturwert-Geber 40. Die Produktbildung aus Retuschefaktoren r und Farbinkrementen $\Delta F$ erfolgt mit Hilfe von vier Tabellenspeichern 100 mit jeweils 256 Speicherplätzen à 8 Bit Wortlänge. In diesem Falle werden die Korrekturwerte $F_R = \pm \Delta F \cdot r$ vor der Retusche für alle möglichen Retuschefaktoren r berechnet und in den Tabellenspeichern 100 abgelegt, wobei negative Retuschewerte als Zweierkomplement-Zahl eingeschrieben werden. Während der Retusche werden dann die über den Daten-Bus 57 aus dem Retusche-Speicher 49 ausgelesenen Retuschefaktoren r an die Adreßeingänge 101 der Tabellenspeicher 100 gelegt, die zugehörigen Korrekturwerte $F_R$ ausgelesen und über die Leitungen 58, 59, 60 und 61 den Addierstufen 15, 16, 17 und 18 zugeführt.

Figur 11 zeigt ein Ausführungsbeispiel des Retusche-Gebers 39 für den Fall, daß die Retuschefaktoren aus dem mechanischen Druck ermittelt werden, mit dem der Retuscheur den Koordinatenstift 51 auf das Digitalisiertablett 50 drückt. Dazu ist in den Koordinatenstift 51 ein Druckaufnehmer 102 eingebaut, der den ausgeübten Druck in eine Meßspannung umsetzt.

Solche Druckaufnehmer sind im Handel erhältlich. Es kann z. B. ein Druckaufnehmer von Typ KPY 13 der Fa. Siemens verwendet werden.

Alternativ könnten die Retuschefaktoren aber auch aus dem mechanischen Druck berechnet werden, mit dem eine Taste gedrückt wird, die einen entsprechenden Druckaufnehmer enthält.

Dem Druckaufnehmer 102 ist ein A/D-Wandler 103 nachgeschaltet, welcher die Meßspannung in digitale Spannungswerte p umformt. Meßstufe 52 und A/D-Wandler 103 werden über eine Leitung 104 von einem in der Aufwerte-Schaltung 48 erzeugten Synchronisiertakt synchronisiert. Mit dem Synchronisiertakt werden laufend die erfaßten Koordinaten-Paare x, y von der Meßstufe 52 über den Adreß-Bus 53 und die zugehörigen digitalen Spannungswerte p (x, y) vom A/D-Wandler 103 über ein Daten-Bus 105 in die Auswerte-Schaltung 48 überschrieben und dort in dem Arbeitsspeicher listenmäßig festgehalten.

Ein Ausschnitt dieser Liste sieht beispielsweise so aus :

$$\begin{array}{lcll}
x_1, y_1 & & p_1 & \\
 & & \longleftarrow & A \\
x_1, y_1 & \hat{=} & p_1 & \\
x_2, y_2 & \hat{=} & p_2 & \\
x_3, y_3 & \hat{=} & p_3 & \\
x_1, y_1 & \hat{=} & p_4 & \\
 & & \longleftarrow & B \\
x_4, y_4 & \hat{=} & p_5 &
\end{array}$$

Die Pfeile A und B kennzeichnen wiederum wie in Figur 3c die Austastlücke der Bildaufzeichnung, in der die Retuschefaktoren bestimmt und in den Retusche-Speichern 49 überschrieben werden. Tritt ein Koordinaten-Paar zwischen zwei Austastlücken nur einmal auf, so ist der zugehörige Retuschefaktor gleich dem für dieses Koordinaten-Paar gemessenen Druckwert. Tritt ein Koordinaten-Paar dagegen mehrfach auf, entspricht der Retuschefaktor des Koordinaten-Paares der Summe der nacheinander gemessenen Druckwerte für dieses Koordinaten-Paar.

Im Beispiel ist $r(x_1, y_1) = p_1 + p_4$ ; $r(x_2, y_2) = p_2$ ; und $r(x_3, y_3) = p_3$.

Die Übertragung der Retuschefaktoren in den Retusche-Speicher 49 wurde bereits ausführlich in Figur 1 beschrieben.

Figur 12 zeigt ein weiteres Ausführungsbeispiel des Retusche-Gebers 39 für den Fall, daß die Retuschefaktoren aus der Verweildauer des Koordinatenstiftes 51 auf den entsprechenden Punkten des Digitalisiertabletts 50 bzw. aus der Zeitdauer ermittel werden, für die eine Betriebstaste gedrückt wird, während der Koordinatenstift 51 die entsprechenden Punkte berührt.

Die Auswerte-Schaltung 48 des Retusche-Gebers 39 besteht aus einem Taktgenerator 106, einem Retusche-Zähler 107, aus zwei in Reihe geschalteten Speicherregistern 108 und 109, einem Vergleicher 110, einem Arbeitsspeicher 111 und aus einer Rechenstufe 112. Der Arbeitsspeicher 111 wird über einen Adreß-Bus 113 vom Speicherregister 109 adressiert. Der Arbeitsspeicher 111 ist über einen Daten-Bus 114 mit der Rechenstufe 112 verbunden. Die Rechenstufe 112 ist außendem über einen weiteren Daten-Bus 115 an den Retusche-Zähler angeschlossen.

Die in dem Taktgenerator 106 erzeugte Taktfolge wird der Meßwert-Stufe 52 als Lesetakt über eine Leitung 117, den Speicherregistern 108 und 109 als Speichertakt auf einer Leitung 118 und dem Retusche-Zähler 107 als Zähltakt auf einer Leitung 119 zugeführt, wobei der Zähltakt zur Bestimmung der Verweildauer dient.

Mit dem Lesetakt auf der Leitung 117 werden laufend die Koordinaten-Paare der berührten Punkte aus der Meßwert-Stufe 52 ausgelesen und über den Adreß-Bus 53 derart in die Speicherregister 108 und 109 übernommen, daß im Speicherregister 108 jeweils das aktuelle Koordinaten-Paar und im Speicherregister 109 das vorherige Koordinaten-Paar abgelegt ist. Die gespeicherten Koordinaten-Paare werden in dem Vergleicher 110 miteinander verglichen, wobei der Vergleicher 110 bei einem Koordinaten-Wechsel ein Steuersignal auf einer Leitung 120 erzeugt.

Sind die aufeinanderfolgenden Koordinaten-Paare gleich, wird bei jedem ausgelesen, gleichen Koordinaten-Paar der Zählerstand des Retusche-Zählers 107 durch einen entsprechenden Zähltakt auf der Leitung 119 und « 1 » erhöht. Da gleiche Koordinaten-Paare aber bedeuten, daß der Koordinatenstift 51 momentan auf einem Punkt fixiert wurde, ist der Zählerstand somit ein Maß für die Verweildauer des Koordinatenstiftes 51 auf diesem Punkt. Der Zählerstand entspricht somit dem Retuschefaktor r.

Wird mittels des Vergleichers 110 dagegen festgestellt, daß ein momentanes Koordinaten-Paar und das vorherige Koordinaten-Paar ungleich sind, was bei einer Bewegung des Koordinatenstiftes der Fall ist, gibt das Steuersignal des Vergleichers 110 über die Leitung 120 einen Befehl an den Arbeitsspeicher 111. Gleichzeitig wurde der Arbeitsspeicher 111 über den Adreß-Bus 113 mit dem vorherigen Koordinaten-Paar adressiert. Der unter der aufgerufenen Adresse bereits abgelegte Retuschefaktor wird über den Daten-Bus 115 in die Rechenstufe 112 transferiert. In der Rechenstufe 112 werden der ausgelesene Retuschefaktor und der im Retusche-Zähler 107 ermittelte Retuschefaktor addiert bzw. voneinander subtrahiert und der korrigierte Retuschefaktor wieder in den Arbeitsspeicher 111 zurückgeschrieben.

Die Liste der Koordinaten-Paare sieht beispielsweise so aus :

$x_1, y_1$ ← A
$x_1, y_1$
$x_1, y_1$
$x_1, y_1$ $r(x_1, y_1) = 3$
———
$x_2, y_2$
$x_2, y_2$ $r(x_2, y_2) = 2$
———
$x_1, y_1$
$x_1, y_1$ $r(x_1, y_1) = 2$
$x_1, y_1$ ← B

Zwischen zwei Austastlücken, die wiederum durch A und B gekennzeichnet sind, ergeben sich somit die Retuschefaktoren $r(x_1, y_1) = 3 + 2 = 5$ und $r(x_2, y_2) = 2$.

Während der Austastlücke werden dann, wie bereits ausführlich erläutert, die Retuschefaktoren aus dem Arbeitsspeicher 111 über die Rechenstufe 112 in den Retusche-Speicher 49 transferiert. Nach dem Transfer wird der Arbeitsspeicher 111 gelöscht.

Figur 13 zeigt ein weiteres Ausführungsbeispiel für einen Retusche-Geber zur Erzeugung einer Retuschemaske.

Der Retusche-Geber 39 weist zusätzlich einen Masken-Speicher 122 und eine mit diesem über einen Daten-Bus 123 verbundene Tor-Schaltung 124 auf, die dem Retusche-Speicher 49 nachgeschaltet und im Daten-Bus 57 angeordnet ist. Jedem der 512 × 512 Bildpunkte des Farbbildes ist im Masken-Speicher 122 wie auch im Bildwiederholspeicher 7 und im Retusche-Speicher 49 ein Speicherplatz zugeordnet, auf dem eine Maskeninformation à 1 Bit abgelegt werden kann. Beispielsweise werden diejenigen Speicherplätze, deren zugeordnete Bildpunkte zum Retuschebereich gehören, auf logisch « H » und die restlichen Speicherplätze auf logisch « L » gesetzt. Die Füllung des Masken-Speichers 122 mit den entsprechenden Maskeninformationen zur Erzeugung der gewünschten Retuschemaske läuft folgendermaßen ab.

Im Falle eines beliebig geformten Retuschebereiches im zu retuschierenden Farbbild wird die Begrenzungslinie dieses Retuschebereiches mit dem Koordinatenstift 51 nachgezeichnet, wodurch diejenigen Speicherplätze des Masken-Speichers 122, die den Bildpunkten der überfahrenden Begrenzungslinie zugeordnet sind, über den Adreß-Bus 54' adressiert werden. Gleichzeitig legt die Auswerte-Schaltung 48 über einen weiteren Daten-Bus 125 die Maskeninformation logisch « H » auf den aufgerufenen Speicherplätzen ab. Wenn die Begrenzungslinie der Retuschemaske erzeugt ist, werden alle Speicherplätze, die den innerhalb der Begrenzungslinie liegenden Bildpunkte des Retuschebereiches bzw. der Retuschemaske automatisch auf logisch « H » und die Speicherplätze, die den außerhalb der Begrenzungslinie liegenden Bildpunkten zugehören, auf logisch « L » gesetzt.

Dieser Vorgang läßt sich durch einen Steuerbefehl von der Eingabe-Stufe 37 über die Steuerleitung 64 an die Auswerte-Schaltung 48 invertieren, wodurch der außerhalb der Begrenzungslinie liegende Teil des Farbbildes als Retuschebereich gekennzeichnet wird.

Bei gradlinigen Retuschebereichen genügt es, lediglich die Eckpunkt-Koordinaten der Begrenzungslinie für die Retuschemaske mit dem Koordinatenstift 51 zu markieren, während die vollständige Begrenzungslinie anhand der eingegebenen Koordinaten berechnet wird.

Die Erzeugung der Retuschemaske wird besonders einfach, wenn die Retuschefläche Rechteck-Form, Kreis-Form usw. hat, da in diesem Falle lediglich die entsprechenden Parameter eingegeben werden müssen.

Während des Retuschevorgangs wird der Masken-Speicher 122 von Adreß-Steuerwerk 8 über den Adreß-Bus 54 adressiert, wodurch Bildwiederholspeicher 7, Retusche-Speicher 49 und Masken-Speicher 122 synchron und bildpunktgenau ausgelesen werden. Die Maskeninformationen steuern die Tor-Schaltung 124 über den Daten-Bus 123 in der Weise, daß die aus dem Retusche-Speicher 49 ausgelesenen Retuschefaktoren bei der Maskeninformation logisch « H » (Retuschebereich) über die Tor-Schaltung 124 an den Korrekturwert-Geber 40 gegeben werden, während die Übertragung der Retuschefaktoren bei der Maskeninformation logisch « L » (Restbild) gesperrt ist. Dadurch bleibt das nicht zu retuschierende Restbild automatisch unbeeinflußt, auch wenn die im Retusche-Speicher 49 abgelegten Retuschefaktoren dort ansich eine Korrektur hervorrufen würden.

Figur 14 zeigt eine Variante der Schaltungsanordnung nach Figur 1.

Die digitalen Farbwerte F werden aus dem Speichermedium 1 über die Daten-Busse 5 und 6 mit Hilfe des Prozeßrechners 4 in den Bildwiederholspeicher 7 geladen. Der Prozeßrechner 4 wählt die entsprechenden Speicheradressen über den Adreß-Bus 9 an und liefert zusätzliche Steuersignale an den Steuerungs-Bus 126.

Zur Darstellung des Farbbildes auf dem Farbmonitor 2 ruft das Speichersteuerwerk 8 die Adressen des Bildwiederholspeichers 7 über den Adreß-Bus 9 zyklisch auf. Die ausgelesenen Farbwerte F werden über einen Daten-Bus 127 den D/A-Wandlern 22 zugeführt und dort in analoge Farbsignale umgesetzt.

Das Koordinaten-Erfassungsgerät besteht wiederum aus dem Digitalisiertablett 50, dem Koordinatenstift 51 und der Meßstufe 52.

Die Koordinaten der mit dem Koordinatenstift 51 auf dem Digitalisiertablett 50 berührten Punkte werden über den Daten-Bus 53 in einen Mikrocomputer 128 übernommen, in dem aus den Koordinaten die Retuschefaktoren r ermittelt werden. Die in der Eingabestufe 37 vorgegebenen Farbanteile werden über den Daten-Bus 43 an den Mikrocomputer 128 übermittelt. Die im Meßwert-Speicher 35 ermittelten Farbanteile gelangen über den Daten-Bus 42 an den Mikrocomputer 128.

Der Mikrocomputer 128 errechnet aus den eingegebenen Farbanteilen die Farbinkremente $\Delta F$ und aus den Farbinkrementen $\Delta F$ und den Retuschefaktoren r die Korrekturwerte $F_R$.

Während der vertikalen Austastlücke der Bildaufzeichnung, welche das Speichersteuerwerk 8 an den Steuerungs-Bus 126 signalisiert, wird der Adreß-Bus 9 vom Speichersteuerwerk 8 getrennt.

Der freigeschaltete Adreß-Bus 9 wird dann vom Mikrocomputer 128 dazu benutzt, die den erfaßten Koordinaten entsprechenden Speicherplätze des Bildwiederholspeichers 7 zu adressieren, die dort abgelegten Farbwerte F in den Mikrocomputer 128 zu lesen und die entsprechenden Korrekturwerte $F_R$ nach der Beziehung $F' = F \pm F_R$ zu addieren oder zu subtrahieren. Anschließend werden die geänderten digitalen Farbwerte F' über den Daten-Bus 6 wieder in den Bildwiederholspeicher 7 zurückgeschrieben. Während der nächsten Bildwiederholperiode erscheint dann auf dem Bildschirm 3 des Farbmonitors 2 bereits das retuschierte Farbbild. Der Mikrocomputer 128 steuert auch den Lichtmarken-Generator 21, der die mit dem Koordinatenstift 51 synchronisierte Lichtmarke 31 auf dem Farbmonitor 2 erzeugt.

## Gewerbliche Verwertbarkeit

Die Erfindung wird mit Vorteil auf dem gesamten Gebiet der elektronischen Reproduktionstechnik angewendet, insbesondere auf dem Gebiet der Farbbildreproduktion mittels elektronischer Farbscanner und Farbreproduktionssysteme zur Herstellung von retuschierten und korrigierten Druckformen in Form von Farbauszügen oder Druckzylindern.

## Aufstellung der Bezugszahlen

1 Speichermedium
2 Farbmonitor
3 Bildschirm
4 Prozeßrechner
5 Datenbus
6 Datenbus
7 Bildwiederholspeicher
8 Speichersteuerwerk
9 Adreßbus
10 Leitung
11 Datenleitung
12 Datenleitung
13 Datenleitung
14 Datenleitung
15 Addierstufe
16 Addierstufe
17 Addierstufe
18 Addierstufe
19 Korrekturschaltung
20 Datenbus
21 Lichtmarken-Generator
22 D/A-Wandler

23 Drucknachbildungsrechner
24 Taktgenerator
25 Leitung
26 Leitung
27 Leitung
28 Leitung
29 Leitung
30 Leitung
31 Lichtmarke
32 Koordinaten-Steuerhebel
33 Adressenleitung
34 Leitung
35 Meßwert-Speicher
36 Schreibeingang
37 Eingabestufe
38 Farbgeber
39 Retuschegeber
40 Verknüpfungsstufe
41 Leitung
42 Datenbus
43 Datenbus
44 Datenleitung
45 Datenleitung
46 Datenleitung
47 Datenleitung
48 Auswerte-Schaltung
49 Retusche-Speicher
50 Digitalisiertablett
51 Koordinatenstift
52 Meßstufe
53 Adreßbus
54 Adreßbus
55 Datenbus
56 Leitung
57 Datenbus
58 Datenleitung
59 —
60 —
61 —
62 Leitung
63 Leitung
64 Leitung
65 Retuschefläche
66 Bildpunkt
67 Linie
68 Leitung
69 Leitung
70 Datenbus
71 Datenbus
72 Datenbus
73 Punkt
74 Linie
75 Linie
76 Steuerstufe
77 Eingang
78 Datenleitung
79 Datenleitung
80 Datenleitung
81 Ausgänge
82 Steuerbus
83 Steuerbus
84 Taktgenerator
85 Zähleingang
86 X-Adreßzähler
87 Ausgang

88 Zähleingang
89 Y-Adreßzähler
90 Ausgang
91 erster Vergleichseingang
92 erster Vergleichseingang
93 Vergleicher
94 Vergleicher
95 zweiter Vergleichseingang
96 zweiter Vergleichseingang
97 Signalausgang
98 Signalausgang
99 UND-Tor
100 Tabellenspeicher
101 Adreßeingänge
102 Druckaufnehmer
103 A/D-Wandler
104 Leitung
105 Datenbus
106 Taktgenerator
107 Retusche-Zähler
108 Speicherregister
109 Speicherregister
110 Vergleicher
111 Arbeitsspeicher
112 Rechenstufe
113 Adreß-Bus
114 Daten-Bus
115 Daten-Bus
116 —
117 Leitung
118 Leitung
119 Leitung
120 Leitung
121 —
122 Masken-Speicher
123 Daten-Bus
124 Tor-Schaltung
125 Daten-Bus
126 Steuerungs-Bus
127 Daten-Bus
128 Mikrocomputer

**Ansprüche**

1. Verfahren zur partiellen elektronischen Retusche bei der Farbbildreproduktion, in dem die durch bildpunktweise und trichromatische Vorlagenabtastung erzeugten Farbsignalen digitalisiert und die digitalen Farbwerte der einzelnen Farbkomponenten in einem Speichermedium abgelegt werden und in dem die Ortskoordinaten-Paare der im Farbbild zu retuschierenden Bildpunkte mittels eines Koordinaten-Erfassungsgerätes durch Markieren der ortsmäßig zugeordneten Punkte mit einer Markiervorrichtung, insbesondere mit einem Koordinatenstift, erfaßt und die gespeicherten Farbwerte unter Kontrolle korrigiert werden, dadurch gekennzeichnet, daß folgende Verfahrensschritte durchgeführt werden :

a) Festlegen von Farbinkrementen ($\Delta Y$ bzw. $\Delta M$, $\Delta C$, $\Delta K$) für die einzelnen Farbkomponenten vor der Koordinaten-Erfassung, wobei die Farbinkremente ($\Delta Y$ bzw. $\Delta M$, $\Delta C$, $\Delta K$) jeweils die kleinsten Änderungsbeträge pro Korrekturschritt für die Farbwerte (Y bzw. M, C, K) angeben ;

b) Festlegen der Retuscherichtung (Positiv- oder Negativ-Retusche) durch Vorzeichenvorgabe vor der Koordinaten-Erfassung ;

c) Gewinnen eines Retuschefaktors (r) für jedes erfaßte Ortskoordinaten-Paar (x, y) mittels der Markiervorrichtung zur gleichzeitigen Bestimmung der Retuschestärke bei der Koordinaten-Erfassung, wobei der Retuschefaktor (r) für jeden zu retuschierenden Bildpunkt die Anzahl der zu summierenden oder zu subtrahierenden Farbinkremente ($\Delta Y$ bzw. $\Delta M$, $\Delta C$, $\Delta K$) angibt ;

d) Bilden von Korrekturwerten ($Y_R$ bzw. $M_R$, $C_R$, $K_R$), welche den zu retuschierenden Bildpunkten ortsmäßig zugeordnet sind, für die einzelnen Farbkomponenten durch Multiplikation der Farbinkremente ($\Delta Y$ bzw. $\Delta M$, $\Delta C$, $\Delta K$) der entsprechenden Farbkomponenten mit den gewonnenen Retuschefaktoren (r) und

e) Erzeugen der retuschierten Farbwerte (Y' bzw. M', C', K') durch bildpunktweises Addieren von Farbwerten (Y bzw. M, C, K) und ortsmäßig zugeordneten Korrekturwerten ($Y_R$ bzw. $M_R$, $C_R$, $K_R$).

2. Verfahren nach Anspruch 1, dadurch gekennzeichnet, daß der Retuschefaktor (r) für einen Bildpunkt aus der Anzahl von Berührungen des entsprechenden Punktes mit der Markiervorrichtung (51) ermittelt wird, wobei der Retuschefaktor (r) mit jeder Berührung um einen Betrag erhöht (Verstärkung der Retusche) oder erniedrigt (Rücknahme der Retusche) wird.

3. Verfahren nach Anspruch 1, dadurch gekennzeichnet, daß der Retuschefaktor (r) für einen Bildpunkt aus dem Druck der Markiervorrichtung (51) auf den entsprechenden Punkt ermittelt wird, wobei der Retuschefaktor (r) entsprechend der Druckänderung um einen Betrag erhöht (Verstärkung der Retusche) oder erniedrigt (Rücknahme der Retusche) wird.

4. Verfahren nach Anspruch 1, dadurch gekennzeichnet, daß der Retuschefaktor (r) für einen Bildpunkt aus der Verweildauer der Markiervorrichtung (51) auf dem entsprechenden Punkt ermittelt wird, wobei der Retuschefaktor (r) entsprechend der jeweiligen Verweildauer um einen Betrag erhöht (Verstärkung der Retusche) oder erniedrigt (Rücknahme der Retusche) wird.

5. Verfahren nach einem der Ansprüche 1-4, dadurch gekennzeichnet, daß

a) das Farbbild zur Sichtkontrolle auf einem Farbmonitor (2) dargestellt wird,

b) in den Bildschirm (3) des Farbmonitors (2) eine verschiebbare Lichtmarke (31) eingeblendet wird, welche den mit der Markiervorrichtung erfaßten Bereich des Farbbildes sichtbar macht, und

c) die Bewegung der Lichtmarke (31) mit der Bewegung der Markiervorrichtung (51) des Koordinaten-Erfassungsgerätes (50, 52) synchronisiert wird.

6. Verfahren nach einem der Ansprüche 1-5, dadurch gekennzeichnet, daß

a) die digitalen Farbwerte (Y bzw. M, C, K) der einzelnen Bildpunkte des Farbbildes aus dem Speichermedium (1) in einen Bildwiederholspeicher (7) geladen werden ;

b) die ermittelten Retuschefaktoren (r) der einzelnen Bildpunkte in einen Retusche-Speicher (49) geschrieben werden und

c) Bildwiederholspeicher (7) und Retusche-Speicher (49) zur Darstellung des Farbbildes auf dem Farbmonitor (2) zyklisch und synchron ausgelesen werden, wodurch Farbwerte (Y bzw. M, C, K) und Retuschefaktoren (r) bzw. Korrekturwerte ($Y_R$ bzw. $M_R$, $C_R$, $K_R$) einander bildpunktmäßig zugeordnet werden.

7. Verfahren nach Anspruch 6, dadurch gekennzeichnet, daß die Retuschefaktoren (r) jeweils in einer Austastlücke der Bilddarstellung auf dem Farbmonitor (2) in den Retusche-Speicher (49) überschrieben werden.

8. Verfahren nach einem der Ansprüche 1-7, dadurch gekennzeichnet, daß die Farbwert-Änderung, die jeweils mit einem Farbinkrement ($\Delta Y$ bzw. $\Delta M$, $\Delta C$, $\Delta K$) erreicht wird, unterhalb der sichtbaren Grenze liegt.

9. Verfahren nach Anspruch 8, dadurch gekennzeichnet, daß die Wertigkeit der digitalen Farbinkremente ($\Delta Y$ bzw. $\Delta M$, $\Delta C$, $\Delta K$) kleiner als die Wertigkeit des niedrigst wertigen Bits (LSB) der digitalen Farbwerte (Y bzw. M, C, K) gewählt wird.

10. Verfahren nach einem der Ansprüche 1-9, dadurch gekennzeichnet, daß jeder Farbwert (Y bzw. M, C, K) einer vorgegebenen oder im Farbbild ausgemessenen Zielfarbe, die bei der Retusche erreicht werden soll, zur Bestimmung der kleinsten Änderungsbeträge für die Farbwerte pro Korrekturschritt) in dieselbe Anzahl entsprechender Farbinkremente ($\Delta Y$ bzw. $\Delta M$, $\Delta C$, $\Delta K$) unterteilt wird.

11. Verfahren nach einem der Ansprüche 1-9, dadurch gekennzeichnet, daß die Farbwert-Differenzen zwischen einer Zielfarbe, die bei der Retusche erreicht werden soll, und einer Anfangsfarbe, von der die Retusche ausgehen soll, gebildet werden und jede Farbwert-Differenz zur Bestimmung der kleinsten Änderungsbeträge für die Farbwerte pro Korrekturschritt in dieselbe Anzahl entsprechender Farbinkremente ($\Delta Y$ bzw. $\Delta M$, $\Delta C$, $\Delta K$) unterteilt wird.

12. Verfahren nach Anspruch 10 oder 11, dadurch gekennzeichnet, daß zur Bestimmung der kleinsten Änderungsbeträge der Farbwerte (Y bzw. M, C, K) pro Korrekturschritt die Anzahl der Farbinkremente ($\Delta Y$ bzw. $\Delta M$, $\Delta C$, $\Delta K$) als Quotient aus den Farbwerten (Y bzw. M, C, K) der Zielfarbe bzw. aus den Farbwert-Differenzen aus Anfangsfarbe und Zielfarbe und der Anzahl der Korrekturschritte, mit denen die Zielfarbe erreicht werden soll, gebildet wird.

13. Verfahren nach Anspruch 11 oder 12, dadurch gekennzeichnet, daß die Farbwert-Differenzen zwischen Anfangsfarbe und Zielfarbe den Farbwerten einer aufzutragenden Retuschefarbe entsprechen.

14. Verfahren nach Anspruch 11 oder 12, dadurch gekennzeichnet, daß die Anfangsfarbe und die Zielfarbe jeweils eine Auszugsfarbe ist.

15. Verfahren nach einem der Ansprüche 1-14, dadurch gekennzeichnet, daß eine Anfangsfarbe durch Subtraktion von Korrekturwerten ($Y_R$ bzw. $M_R$, $C_R$, $K_R$) von den Farbwerten (Y bzw. M, C, K) dieser Anfangsfarbe aufgehellt wird, wobei die Zielfarbe « Weiß » ist.

16. Verfahren nach einem der Ansprüche 1-14, dadurch gekennzeichnet, daß eine Anfangsfarbe durch Addition von Korrekturwerten ($Y_R$ bzw. $M_R$, $C_R$, $K_R$) zu den Farbwerten (Y bzw. M, C, K) dieser Anfangsfarbe abgedunkelt wird, wobei die Zielfarbe « Schwarz » ist.

17. Verfahren nach Anspruch 16, dadurch gekennzeichnet, daß

a) die Farbwerte (Y bzw. M, C, K) einer abzudunkelnden Anfangsfarbe durch die Retusche anteilsmäßig ansteigen bis der größte Farbwert (Y bzw. M, C, K) der Anfangsfarbe seine maximale Dichte (Dm) erreicht hat und

b) bei fortgesetzter Retusche die Farbwerte (Y bzw. M, C) der bunten Farbkomponenten ihre dabei erreichten Werte beibehalten und nur der Farbwert (K) der unbunten Farbkomponente bis zur maximalen Dichte ansteigt.

18. Verfahren nach Anspruch 16, dadurch gekennzeichnet, daß

a) die Farbwerte (Y bzw. M, C) einer abzudunkelnden Anfangsfarbe durch die Retusche anteilsmäßig ansteigen, bis der größte Farbwert (Y bzw. M, C) der Anfangsfarbe seine maximale Dichte (Dm) erreicht hat und

b) bei fortgesetzter Retusche diejenige Farbkomponente, deren Farbwert die maximale Dichte erreicht hat, unverändert bleibt und nur die Farbwerte (Y bzw. M, C) der anderen Farbkomponenten bis zu deren maximalen Dichten ansteigen.

19. Verfahren nach einem der Ansprüche 1-18, dadurch gekennzeichnet, daß

a) die Ortskoordinaten-Paare (x, y) der markierten Bildpunkte in der Reihenfolge ihrer Erfassung listenmäßig abgelegt werden und

b) die Ortskoordinaten-Paare (x, y) in umgekehrter Reihenfolge aufgerufen und die zugehörigen Retuschefaktoren (r) erniedrigt werden, wodurch die bei den vorherigen Korrekturschritten erfolgte Retusche konturengenau abgeschwächt wird.

20. Verfahren nach einem der Ansprüche 1-19, dadurch gekennzeichnet, daß die gesamte Retusche durch Löschen der in dem Retusche-Speicher (49) abgelegten Retuschefaktoren (r) rückgängig gemacht wird.

21. Verfahren nach einem der Ansprüche 1 bis 20, dadurch gekennzeichnet, daß die Markiervorrichtung gleichzeitig mehrere innerhalb einer Retuschefläche (Fläche des Retuschepinsels) liegende Bildpunkte erfaßt, wodurch der Wirkungsbereich der Markiervorrichtung vergrößert und eine Anzahl von Farbwerten gleichzeitig retuschiert wird.

22. Verfahren nach Anspruch 21, dadurch gekennzeichnet, daß ein mit der Markiervorrichtung (51) bestimmter Retuschefaktor (r) nur dann geändert wird, wenn sich ein erfaßtes Ortskoordinaten-Paar (x, y) von einem zuvor erfaßten Ortskoordinaten-Paar in X- und Y-Richtung um einen Mindestbetrag unterscheidet, wobei der Mindestbetrag die Ausdehnung der Retuschefläche bestimmt.

23. Verfahren nach Anspruch 21, dadurch gekennzeichnet, daß der vergrößerte Wirkungsbereich der Markiervorrichtung (51) durch eine vergrößerte Lichtmarke (31) angezeigt wird.

24. Verfahren nach einem der Ansprüche 1 bis 23, dadurch gekennzeichnet, daß der zu retuschierende Bereich des Farbbildes durch eine elektronisch erzeugte Retuschemaske begrenzt wird.

25. Anordnung zur Durchführung des Verfahrens nach Anspruch 1, bestehend aus einem Speichermedium für digitale Farbwerte, einem nachgeschalteten Bildwiederholspeicher für die digitalen Farbwerte des zu retuschierenden Bildes, einem Farbmonitor zur Darstellung des Farbbildes und aus einem Koordinaten-Erfassungsgerät mit einer Markiervorrichtung, insbesondere mit einem Koordinatenstift, zur Erfassung der Ortskoordinaten-Paare der im Farbbild zu retuschierenden Bildpunkte, gekennzeichnet durch

a) einen Farb-Geber (38) für die Farbinkremente ($\Delta$Y bzw. $\Delta$M, $\Delta$C, $\Delta$K) der einzelnen Farbkomponenten ;

b) eine Eingabe-Stufe (37), die an den Farb-Geber (38) angeschlossen ist ;

c) eine Auswerte-Schaltung (48) für die erfaßten Ortskoordinaten-Paare (x, y), welche an das Koordinaten-Erfassungsgerät (50, 52) angeschlossen ist, zur gleichzeitigen Gewinnung eines Retuschefaktors (r) für jedes erfaßte Ortskoordinaten-Paar (x, y) mit der Markiervorrichtung (51) ;

d) einen Retusche-Speicher (49), welcher an die Auswerte-Schaltung (48) angeschlossen ist, zur Ablage der Retuschefaktoren (r) ;

e) eine Korrekturwert-Stufe (40), welche mit dem Retusche-Speicher (49) und dem Farb-Geber (38) in Verbindung steht, zur Bildung von Korrekturwerten ($Y_R$ bzw. $M_R$, $C_R$, $K_R$) für die einzelnen Farbkomponenten aus dem Retuschefaktor (r) und den Farbinkrementen ($\Delta$Y bzw. $\Delta$M, $\Delta$C, $\Delta$K) und durch

f) Verknüpfungsstufen (15, 16, 17, 18), welche an den Bildwiederholspeicher (7), den Farbmonitor (2) und an die Korrekturwert-Stufe (40) angeschlossen sind, zur Änderung der Farbwerte (Y bzw. M, C, K) durch die Korrekturwerte ($Y_R$ bzw. $M_R$, $C_R$, $K_R$).

26. Anordnung nach Anspruch 25, dadurch gekennzeichnet, daß der Farb-Geber (38) mit einer Einrichtung (8, 21, 32, 35) zur Farbmessung in dem dargestellten Farbbild auf dem Farbmonitor (2) verbunden ist.

**Claims**

1. Method for partial electronic retouching during colour picture reproduction, in which the colour signals generated by scanning an original image dot by image dot and trichromatically are converted into digital form and the digital colour values of the individual colour components are stored in a storage medium and in which the pairs of locus co-ordinates of the image dots which are to be retouched in the colour picture are detected by means of a co-ordinate detector device by marking of the positionally co-ordinated dots by means of a marking device, particularly a co-ordinate pin, and the stored colour values are corrected under control, characterized in that the following method steps are performed :

a) establishing colour increments ($\Delta Y$ or $\Delta M$, $\Delta C$, $\Delta K$ resp.) for the individual colour components prior to co-ordinate detection, the colour increments ($\Delta Y$ or $\Delta M$, $\Delta C$, $\Delta K$ resp.) in each case denoting the minimum alteration amounts per correcting step for the colour values (Y or M, C, K resp.) ;

b) establishing the retouching direction (positive or negative retouching) by prefix presetting prior to co-ordinate detection ;

c) determining a retouching factor (r) for each pair (x, y) of locus co-ordinates detected, by means of the marking device for simultaneous determination of the retouching intensity during detection of co-ordinates, the retouching factor (r) specifying the number of the colour increments ($\Delta Y$ or $\Delta M$, $\Delta C$, $\Delta K$ resp.) which are to be added or subtracted for each image dot which is to be retouched ;

d) producing correcting values ($Y_R$ or $M_R$, $C_R$, $K_R$ resp.) which are positionally co-ordinated with the image dots which are to be retouched, for the individual colour components by multiplication of the colour increments ($\Delta Y$ or $\Delta M$, $\Delta C$, $\Delta K$ resp.) of the corresponding colour components by the retouching factor (r) obtained, and

e) establishing the retouched colour values (Y' or M', C', K' resp.) by addition of colour values (Y or M, C, K resp.) and positionally co-ordinated correcting values ($Y_R$ or $M_R$, $C_R$, $K_R$).

2. Method according to claim 1, characterized in that the retouching factor (r) for an image dot is determined from the number of contacts of the corresponding dot with the marking device (51), the retouching factor (r) being increased by a quantity (increasing retouching intensity) or reduced by a quantity (reducing retouching intensity) with each contact.

3. Method according to claim 1, characterized in that the retouching factor (r) for an image dot is determined from the pressure of the marking device (51) on the corresponding dot, the retouching factor (r) being increased (increasing retouching intensity) or reduced (reducing retouching intensity) by a quantity in dependance on the pressure variation.

4. Method according to claim 1, characterized in that the retouching factor (r) for an image dot is determined from the period of dwell of the marking device (51) on the dot in question, the retouching factor being increased (increasing retouching intensity) or reduced (reducing retouching intensity) by a quantity, in dependance on the dwell period in question.

5. Method according to one of the claims 1-4, characterized in that,

a) the colour picture in displayed on a colour monitor (2) for visual inspection,

b) a movable light mark (31) is gated into the image screen (3) of the colour monitor (2), which visibly depicts the area of the colour picture marked by the marking device, and

c) the displacement of the light mark (31) is synchronized with the displacement of the marking device (51) of the co-ordinate detection device (50, 52).

6. Method according to one of the claims 1-5, characterized in that

a) the digital colour values (Y or M, C, K resp.) of the individual image dots of the colour picture are loaded into an image refresh memory (7) from the storage medium (1) ;

b) the retouching factors (r) determined for the individual image dots are written into a retouching memory (49), and

c) the image refresh memory (7) and the retouching memory (49) are read out cyclically and synchronously for display of the colour picture on the colour monitor (2), the colour values (Y or M, C, K resp.) and the retouching factors (r) or the correcting values ($Y_R$ or $M_R$, $C_R$, $K_R$ resp.) thereby being co-ordinated image dot by image dot.

7. Method according to claim 6, characterized in that the retouching factors (r) are in each case written into the retouching memory (49) during a blanking interval of the image display on the colour monitor (2).

8. Method according to one of the claims 1 to 7, characterized in that the colour value variation obtained by means of a colour increment ($\Delta Y$ or $\Delta M$, $\Delta C$, $\Delta K$ resp.) in each case, lies below the visible limit.

9. Method according to claim 8, characterized in that the significance of the digital colour increments ($\Delta Y$ or $\Delta M$, $\Delta C$, $\Delta K$ resp.) is selected to be lower than the significance of the least significant bit (LSB) of the digital colour values (Y or M, C, K resp.).

10. Method according to one of the claims 1-9, characterized in that each colour value (Y or M, C, K resp.) of a target colour which is preset or measured within the colour picture and which is to be obtained during retouching, is subdivided into the same number of corresponding colour increments ($\Delta Y$ or $\Delta M$, $\Delta C$, $\Delta K$ resp.) for determination of the minimum alteration amounts for the colour values per correcting step.

11. Method according to one of the claims 1-9, characterized in that the colour value differences between a target colour which is to be obtained during retouching, and an initial colour from which the retouching operation is to start, are established, and that each colour value difference is subdivided into the same number of corresponding colour increments ($\Delta Y$ or $\Delta M$, $\Delta C$, $\Delta K$ resp.) for determination of the minimum alteration amounts for the colour values per correcting step.

12. Method according to claim 10 or 11, characterized in that for determining the minimum alteration amounts for the colour values (Y or M, C, K resp.) per correcting step, the colour increments ($\Delta Y$ or $\Delta M$,

ΔC, ΔK resp.) are established as quotients from the colour values (Y or M, C, K resp.) of the target colour or from the colour value differences between the initial colour and the target colour, and the number of the correcting steps with which the target colour is to be obtained.

13. Method according to claim 11 or 12, characterized in that the colour value differences between the initial colour and the target colour correspond to the colour values of the retouching colour which is to be applied.

14. Method according to claim 11 or 12, characterized in that the initial colour and the target colour is a separation colour in each case.

15. Method according to one of the claims 1-14, characterized in that an initial colour is brigthened by subtraction of correcting values ($Y_R$ or $M_R$, $C_R$, $K_R$ resp.) from the colour values (Y or M, C, K resp.) of this initial colour, the target colour being « white ».

16. Method according to one of the claims 1-14, characterized in that an initial colour is darkened by addition of correcting values ($Y_R$ or $M_R$, $C_R$, $K_R$ resp.) to the colour values of this initial colour (Y or M, C, K resp.), the target colour being « black ».

17. Method according to claim 16, characterized in that

a) the colour values (Y or M, C, K) of an initial colour which is to be darkened are increased proportionately by retouching until the maximum colour value (Y or M, C, K resp.) of the initial colour has reached its maximum density ($D_m$), and

b) during continued retouching, the colour values (Y or M, C resp.) of the chromatic colour components retain their values obtained thereby, and only the colour value (K) of the non-chromatic colour component rises to maximum density.

18. Method according to claim 16, characterized in that

a) the colour values (Y or M, C resp.) of an initial colour which is to be darkened are increased proportionately until the maximum colour value (Y or M, C resp.) of the initial colour has reached its maximum density ($D_m$) and

b) during continued retouching, the colour component whose colour value has reached maximum density remains unchanged and only the colour values (Y or M, C resp.) of the other colour components rise to their maximum densities.

19. Method according to one of the claims 1-18, characterized in that

a) the pairs of locus co-ordinates (x, y) of the marked image dots are stored tabularly in the sequence of their detection, and

b) the pairs of locus co-ordinates (x, y) are called up in reverse sequence and the corresponding retouching factors (r) are reduced, thereby weakening the retouching effect secured during the preceding correcting steps true to contours.

20. Method according to one of the claims 1-19, characterized in that the total retouching effect is cancelled by erasing the retouching factors (r) stored in the retouching memory (49).

21. Method according to one of the claims 1-20, characterized in that the marking device simultaneously marks several image dots situated within a retouching area (area of the retouching brush), thereby increasing the effective range of the marking device and simultaneously retouching a number of colour values.

22. Method according to claim 21, characterized in that a retouching factor (r) determined by means of the marking device (51) is varied only when a detected pair of locus co-ordinates (x, y) differs by a minimum amount from a previously detected pair of locus co-ordinates in the X and Y directions, the minimum amount determining the extension of the retouching area.

23. Method according to claim 21, characterized in that the increased effective range of the marking device (51) is denoted by an enlarged light mark (31).

24. Method according to one of the claims 1 to 23, characterized in that the area of the colour picture which is to be retouched is limited by an electronically generated retouching mask.

25. Arrangement for application of the method according to claim 1, comprising a storage medium for digital colour values, a post-connected image refresh memory for the digital colour values of the picture which is to be retouched, a colour monitor for display of the colour picture and a co-ordinate detector device comprising a marking device, particularly a co-ordinate pin, for detection of the pairs of locus co-ordinate of the image dots which are to be retouched within the colour picture, characterized by

a) a colour transmitter (38) for the colour increments (ΔY or ΔM, ΔC, ΔK resp.) of the individual colour components;

b) an input stage (37) which is connected to the colour transmitter (38);

c) an evaluator circuit (48) for the detected pairs of locus co-ordinates (x, y), which is connected to the co-ordinate detector device (50, 52), for simultaneous determination of a retouching factor (r) for each detected pair of locus co-ordinates (x, y) by means of the marking device (51);

d) a retouching memory (49) which is connected to the evaluator circuit (48) for storage of the retouching factors (r);

e) a correcting value stage (40) which is connected to the retouching memory (49) and the colour transmitter (38), for establishing values ($Y_R$ or $M_R$, $C_R$, $K_R$ resp.) for the individual colour components from the retouching factor (r) and the colour increments (ΔY or ΔM, ΔC, ΔK resp.), and by

f) combining stages (15, 16, 17, 18) which are connected to the image refresh memory (7), the colour monitor (2) and the correcting value stage (40), to alter the colour values (Y or M, C, K resp.) by means of the correcting values ($Y_R$ or $M_R$, $C_R$, $K_R$).

26. Arrangement according to claim 25, characterized in that the colour transmitter (38) is connected to a system (8, 21, 32, 35) for colour measuring in the colour picture displayed on the colour monitor (2).

**Revendications**

1. Procédé de retouchage partiel électronique à la reproduction d'image en couleur, procédé dans lequel les signaux de couleur générés par une détection ponctuelle et trichromatique du modèle sont transformés en signaux numériques et les valeurs de couleur numériques des différentes composantes de couleur sont mises sur un support d'enregistrement, et selon lequel les paires des coordonnées de lieu des points-image à retoucher de l'image en couleur étant saisies à l'aide d'un appareil de saisie de coordonnées par le marquage des points associés au lieu à l'aide d'un dispositif de marquage notamment d'un crayon à coordonnées, et les valeurs de couleur enregistrées sont corrigées sous contrôle, procédé caractérisé en ce qu'on exécute les étapes de procédé suivantes :

a) détermination des incréments de couleur (ΔY, ΔM, ΔC, ΔK resp.) pour les différentes composantes de couleur avant la saisie des coordonnées, les incréments de couleur (ΔY, ΔM, ΔC, ΔK resp.) donnant chaque fois les plus petites variations de valeurs par pas de correction pour les valeurs de couleur (Y, M, C, K resp.) ;

b) détermination du sens de la retouche (retouche positive ou négative) en indiquant le signe algébrique avant la saisie des coordonnées ;

c) obtention d'un facteur de retouche (r) pour chaque paire de coordonnées de lieu (x, y), saisie à l'aide du dispositif de marquage pour déterminer en même temps l'importance de la retouche lors de la saisie des coordonnées, le facteur de retouche (r) donnant pour chaque point-image à retoucher, le nombre des incréments de couleur à additionner ou à retrancher (ΔY, ΔM, ΔC, ΔK resp.) ;

d) formation des valeurs de correction ($Y_R$, $M_R$, $C_R$, $K_R$ resp.) qui sont associées au lieu des points-image à retoucher pour les différentes composantes de couleur par la multiplication des incréments de couleur (ΔY, ΔM, ΔC, ΔK resp.) ou des composantes de couleur correspondantes avec les facteurs de retouche (r) obtenus, et

e) génération des valeurs de couleur à retoucher (Y', M', C', K' resp.) par l'addition ponctuelle des valeurs de couleur (Y, M, C, K resp.) et des valeurs de correction localement associées ($Y_R$, $M_R$, $C_R$, $K_R$ resp.).

2. Procédé selon la revendication 1, caractérisé en ce que le facteur de retouche (r) pour un point-image est déterminé par le nombre de contacts du point correspondant et du dispositif de marquage (51), le facteur de retouche (r) augmentant d'une valeur pour chaque contact (amplification de la retouche); ou diminuant (reprise de la retouche).

3. Procédé selon la revendication 1, caractérisé en ce que le facteur de retouche (r) pour un point-image est déterminé à partir de la pression du dispositif de marquage (51) sur le point correspondant, le facteur de retouche (r) étant augmenté (amplification de la retouche) ou abaissé (retrait de la retouche) d'une valeur en fonction de la variation de pression.

4. Procédé selon la revendication 1, caractérisé en ce que le facteur de retouche (r) pour un point-image est déterminé à partir du temps de séjour du dispositif de marquage (51) sur le point correspondant, le facteur de retouche (r) étant augmenté (amplification de la retouche) ou diminué (retrait de la retouche) d'une valeur en fonction du temps de séjour respectif.

5. Procédé selon l'une quelconque des revendications 1 à 4, caractérisé en ce que :

a) l'image en couleur est représentée sur un moniteur couleur (2) pour le contrôle visuel ;

b) on inserre dans l'écran-image (3) du moniteur couleur (2) un repère lumineux (31) déplaçable, qui fait apparaître le domaine de l'image en couleur saisie par le dispositif de marquage, et

c) on synchronise le mouvement du repère lumineux (31) avec le mouvement du dispositif de marquage (51) de l'appareil de saisie de coordonnées (50, 52).

6. Procédé selon l'une quelconque des revendications 1-5, caractérisé en ce que :

a) on charge les valeurs de couleur numériques (Y, M, C, K resp.) des différents points-image de l'image en couleur du support d'enregistrement (1) dans une mémoire de répétition d'image (7) ;

b) on inscrit les facteurs de retouche (r), déterminés, pour les différents points-image dans une mémoire de retouche (49) et,

c) on effectue la lecture cyclique et synchrone de la mémoire de répétition d'image (7) et de la mémoire de retouche (49) pour représenter l'image en couleur sur le moniteur-couleur (2), de façon que les valeurs de couleur (Y, M, C, K resp.) et les facteurs de retouche (r) ou les grandeurs de correction ($Y_R$, $M_R$, $C_R$, $K_R$ resp.) étant associés entre eux ponctuellement.

7. Procédé selon la revendication 6, caractérisé en ce que les facteurs de retouche (r) sont transcrits chaque fois dans un intervalle de détection de la représentation de l'image sur le moniteur-couleur (2) dans la mémoire de retouche (49).

8. Procédé selon l'une quelconque des revendications 1-7, caractérisé en ce que les variations des valeurs de couleur qui sont obtenues chaque fois par un incrément de couleur (ΔY, ΔM, ΔC, ΔK resp.)

sont inférieures à la limite visible.

9. Procédé selon la revendication 8, caractérisé en ce que la valeur significative des incréments de couleur numériques (ΔY, ΔM, ΔC, ΔK resp.) est choisie inférieure à la valeur significative des bits les moins significatifs faibles (LSB) des valeurs de couleur numériques (Y, M, C, K resp.).

10. Procédé selon l'une des revendications 1-9 caractérisé en ce que chaque valeur de couleur (Y, M, C, K resp.) d'une couleur de consigne donnée ou mesurée sur l'image en couleur et que l'on veut obtenir par la retouche est subdivisée en un même nombre d'incréments de couleur (ΔY, ΔM, ΔC, ΔK resp.), correspondants pour déterminer les plus petites valeurs de variation des valeurs de couleur par pas de correction.

11. Procédé selon l'une des revendications 1-9 caractérisé en ce qu'on forme les différences de valeurs de couleur entre une couleur de consigne que l'on veut obtenir par la retouche et une couleur initiale point de départ de la retouche, et pour déterminer les plus petites valeurs de variation des valeurs de couleur par pas de correction, on subdivise chaque différence de valeur de couleur en un même nombre d'incréments de couleur correspondants (ΔY, ΔM, ΔC, ΔK resp.).

12. Procédé selon la revendication 10 ou 11, caractérisé en ce que pour déterminer les plus petites valeurs de variation des valeurs de couleur (Y, M, C, K resp.) par pas de correction, on détermine les incréments de couleur (ΔY, ΔM, ΔC, ΔK resp.) comme quotients entre les valeurs de couleur (Y, M, C, K resp.) des couleurs de consigne ou des différences de valeurs de couleur entre la couleur initiale et la couleur de consigne et le nombre des pas de correction par lesquels on peut obtenir la couleur de consigne.

13. Procédé selon les revendications 11 ou 12, caractérisé en ce que les différences de valeurs de couleur entre la couleur initiale et la couleur de consigne correspondent aux valeurs de couleur d'une couleur de retouche à mettre en place.

14. Procédé selon la revendication 11 ou 12, caractérisé en ce que la couleur initiale et la couleur de consigne sont chaque fois un extrait de couleur.

15. Procédé selon l'une des revendications 1-14, caractérisé en ce qu'une couleur initiale est rendue plus claire par soustraction de valeurs de correction ($Y_R$, $M_R$, $C_R$, $K_R$ resp.) des valeurs de couleur (Y, M, C, K) de cette couleur initiale, la couleur de consigne étant de blanc.

16. Procédé selon l'une des revendications 1-14, caractérisé en ce qu'on rend plus foncée une couleur initiale par addition de valeurs de correction ($Y_R$, $M_R$, $C_R$, $K_R$ resp.) aux valeurs des couleurs (Y, M, C, K resp.) de cette couleur initiale et la couleur de consigne étant le noir.

17. Procédé selon la revendication 16, caractérisé en ce que :

a) les valeurs de couleur (Y, M, C, K resp.) d'une couleur initiale à assombrir augmentent progressivement par la retouche jusqu'à ce que la plus grande valeur de couleur (Y, M, C, K resp.) de la couleur initiale ait atteint sa densité maximale ($D_m$) et,

b) pour la poursuite de la retouche des valeurs de couleur (Y, M, C resp.) des composantes de couleur à plusieurs couleurs, elles conservent leurs valeurs ainsi atteintes et seule la valeur de couleur (K) de la composante de couleur ne correspondant pas à plusieurs couleurs augmente jusqu'à la densité maximale.

18. Procédé selon la revendication 16, caractérisé en ce que :

a) les valeurs de couleur (Y, M, C resp.) d'une couleur initiale à assombrir augmentent progressivement par la retouche jusqu'à ce que la valeur de couleur la plus grande (Y, M, C resp.) de la couleur initiale ait atteint sa densité maximale ($D_m$) et,

b) pour la poursuite de la retouche, cette composante de couleur dont la valeur de couleur a atteint la densité maximale, reste inchangée et seules les valeurs de couleur (Y, M, C resp.) des autres composantes de couleur augmentent jusqu'à leur densité maximale.

19. Procédé selon les revendications 1-18, caractérisé en ce que :

a) les paires de coordonnées de lieu (x, y) des points image à marquer sont lues sur liste dans la succession de leur saisie, et,

b) les paires de coordonnées de lieu (x, y) sont appelées dans l'ordre inverse et les facteurs de retouche (r) correspondants sont diminués de façon que la retouche faite au cours des opérations de correction précédentes soit atténuée de façon précise suivant le contour.

20. Procédé selon l'une des revendications 1-19, caractérisé en ce que l'ensemble de la retouche est fait par effacement des facteurs de retouche (r) mis dans la mémoire de retouche (49).

21. Procédé selon l'une des revendications 1-20, caractérisé en ce que le dispositif de repérage saisit simultanément plusieurs points-image se trouvant dans la surface de retouche (surface du pinceau à retouche) ce qui augmente la zone d'action du dispositif de marquage et le nombre des valeurs de couleur simultanément retouchées.

22. Procédé selon la revendication 21, caractérisé en ce qu'un facteur de retouche (r) déterminé par le dispositif de marquage (51) n'est modifié que si une paire de coordonnées de lieu (x, y) saisies, diffère d'une paire de coordonnées de lieu saisies précédemment dans la direction (X, Y) d'une valeur minimale, la valeur minimale déterminant l'extension de la surface de retouche.

23. Procédé selon la revendication 21, caractérisé en ce que la zone d'action agrandie du dispositif de marquage (51) est indiquée par un repère lumineux (31) agrandi.

24. Procédé selon l'une des revendications 1-23, caractérisé en ce que la zone à retoucher de l'image en couleur est limitée par un masque à retouche obtenu électroniquement.

25. Montage pour la mise en œuvre du procédé selon la revendication 1 composé d'un support d'enregistrement pour les valeurs de couleur, numériques, suivi d'une mémoire de répétition d'image pour les valeurs de couleur numériques de l'image à retoucher, d'un moniteur-couleur pour représenter l'image-couleur et d'un appareil de saisie de coordonnées à l'aide d'un dispositif de marquage notamment d'un crayon à coordonnées pour saisir les paires de coordonnées de lieu des points-image à retoucher dans l'image en couleur, caractérisé par :

a) un générateur de couleur (38) pour les incréments de couleur ($\Delta Y$, $\Delta M$, $\Delta C$, $\Delta K$ resp.) des différentes composantes de couleur ;

b) un étage d'entrée (37) relié au générateur de couleur (38) ;

c) un circuit d'exploitation (48) pour les paires de coordonnées de lieu (x, y) saisies et qui est relié à l'appareil de saisie de coordonnées (50, 52) pour obtenir simultanément un facteur de retouche (r) pour chaque paire de coordonnées de lieu (x, y) saisie à l'aide du dispositif de repérage (51) ;

d) une mémoire de retouche (49) qui est reliée au circuit d'exploitation (48) pour recevoir les facteurs de retouche (r) ;

e) un étage de valeurs de correction (40) qui coopère avec la mémoire de retouche (49) et le générateur de couleur (38) pour former les valeurs de correction ($Y_R$, $M_R$, $C_R$, $K_R$ resp.) des différentes composantes de couleur à l'aide du facteur de retouche (r) et des incréments de couleur ($\Delta Y$, $\Delta M$, $\Delta C$, $\Delta K$ resp.) et par

f) des étages de combinaison (15, 16, 17, 18) qui sont reliés à la mémoire de répétition d'image (7) au moniteur-couleur (2) à l'étage de valeurs de correction (40) pour modifier les valeurs de couleur (Y, M, C, K resp.) par les valeurs de correction ($Y_R$, $M_R$, $C_R$, $K_R$ resp.).

26. Montage selon la revendication 25, caractérisé en ce que le générateur de couleur (38) est relié à une installation (8, 21, 32, 35) pour mesurer la couleur dans l'image couleur représentée sur le moniteur-couleur (2).

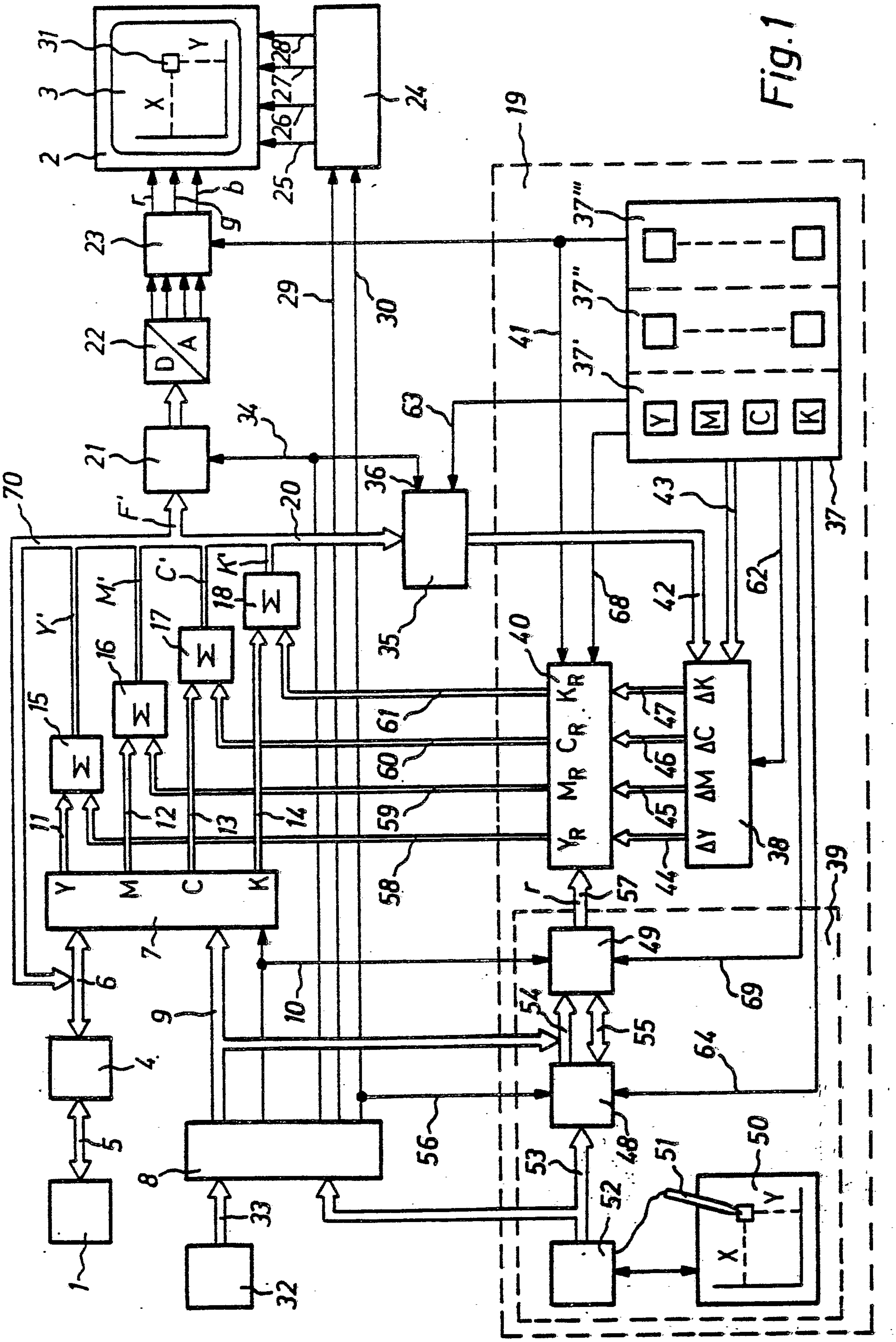

Fig.1

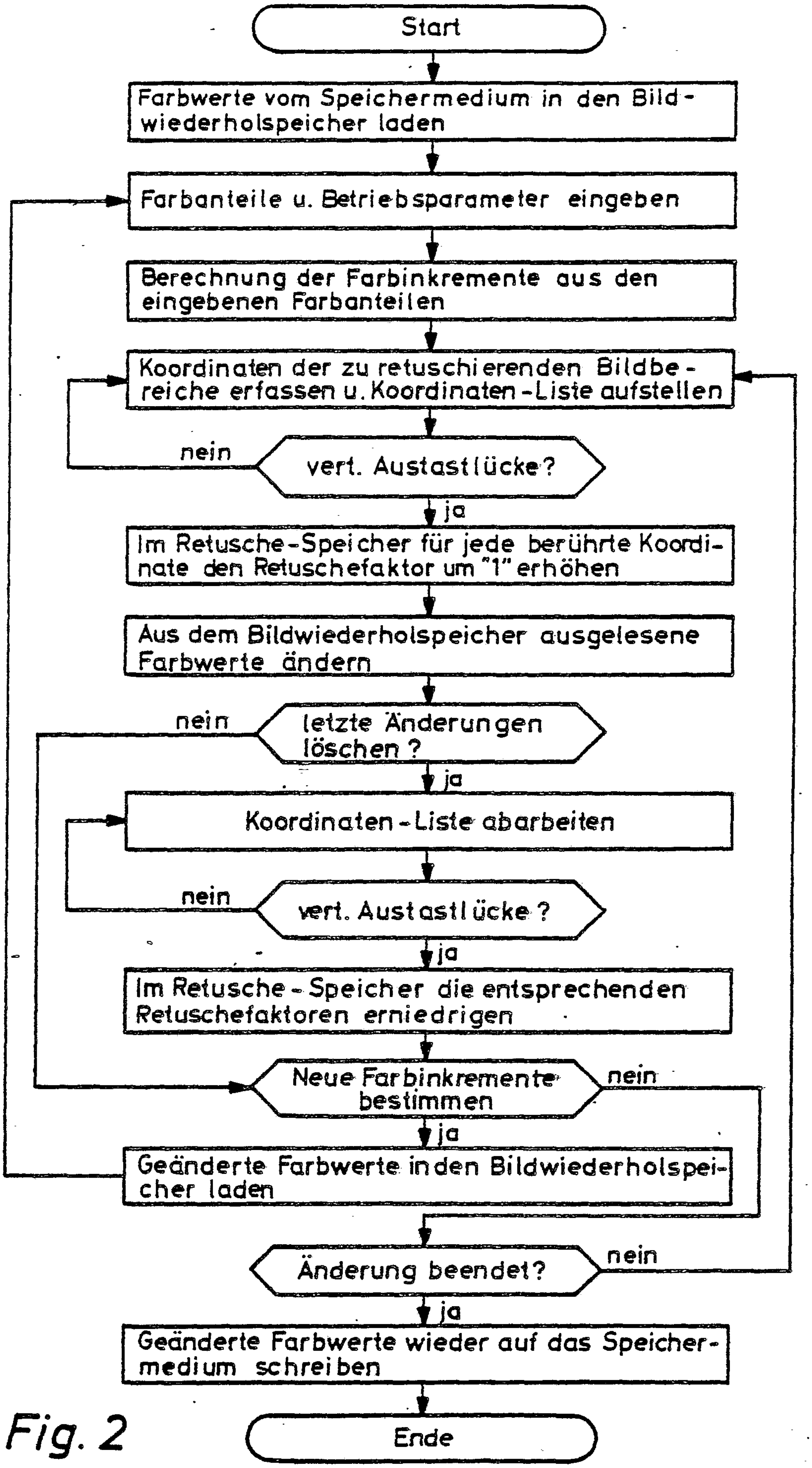
Start
Farbwerte vom Speichermedium in den Bildwiederholspeicher laden
Farbanteile u. Betriebsparameter eingeben
Berechnung der Farbinkremente aus den eingebenen Farbanteilen
Koordinaten der zu retuschierenden Bildbereiche erfassen u. Koordinaten-Liste aufstellen
vert. Austastlücke?
nein
ja
Im Retusche-Speicher für jede berührte Koordinate den Retuschefaktor um "1" erhöhen
Aus dem Bildwiederholspeicher ausgelesene Farbwerte ändern
letzte Änderungen löschen?
nein
ja
Koordinaten-Liste abarbeiten
vert. Austastlücke?
nein
ja
Im Retusche-Speicher die entsprechenden Retuschefaktoren erniedrigen
Neue Farbinkremente bestimmen
nein
ja
Geänderte Farbwerte in den Bildwiederholspeicher laden
Änderung beendet?
nein
ja
Geänderte Farbwerte wieder auf das Speichermedium schreiben
Ende

Fig. 2

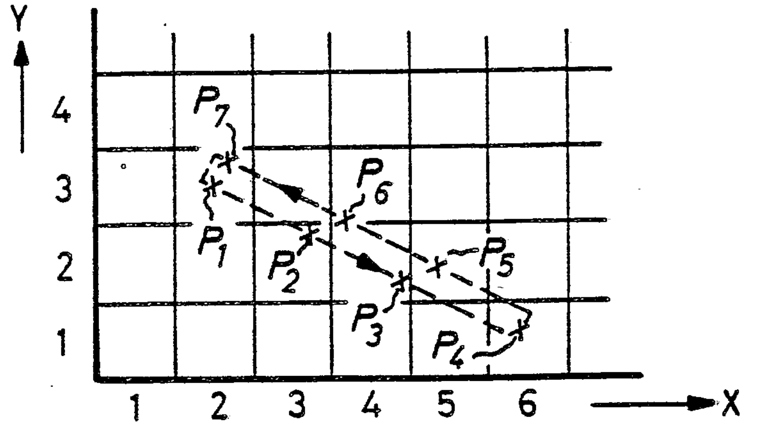


Fig. 3a

| P | X | Y | |
|---|---|---|---|
| $P_1$ | 2 | 3 | ← A |
| $P_2$ | 3 | 2 | |
| $P_3$ | 4 | 2 | |
| $P_4$ | 6 | 1 | |
| $P_5$ | 5 | 2 | ← B |
| $P_6$ | 4 | 3 | |
| $P_7$ | 2 | 3 | |

Fig. 3b

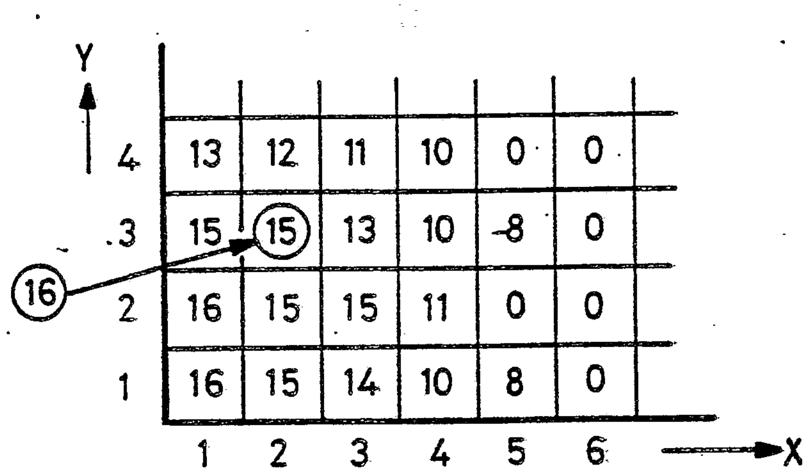


Fig. 4

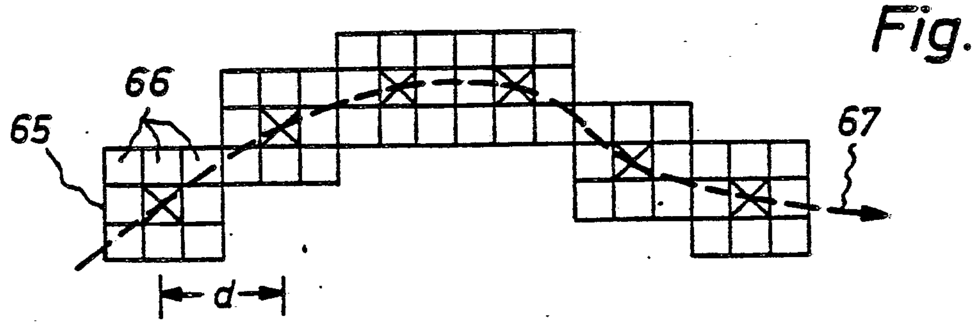

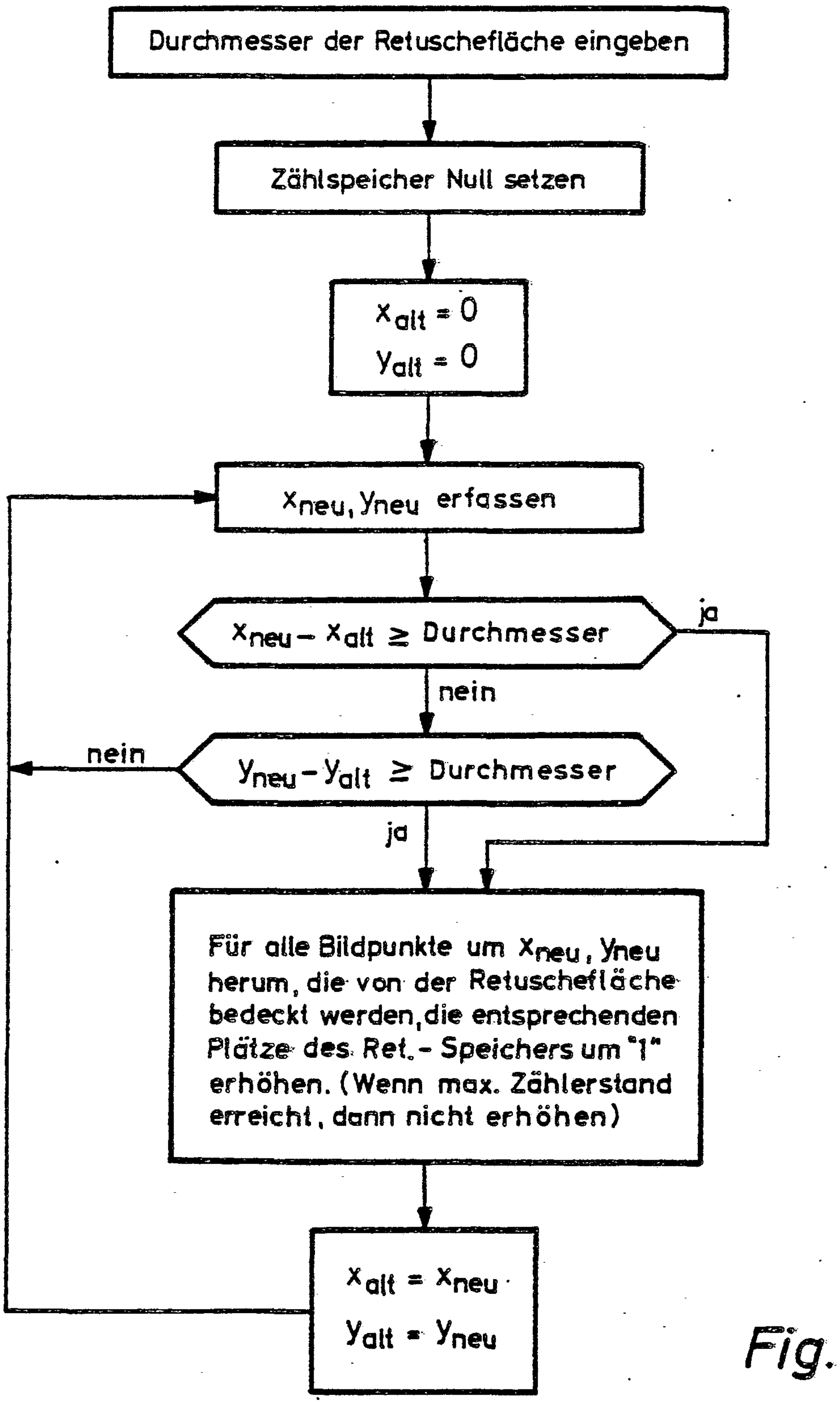
Durchmesser der Retuschefläche eingeben
Zählspeicher Null setzen
$x_{alt} = 0$
$y_{alt} = 0$
$x_{neu}, y_{neu}$ erfassen
$x_{neu} - x_{alt} \geq$ Durchmesser
ja
nein
$y_{neu} - y_{alt} \geq$ Durchmesser
nein
ja
Für alle Bildpunkte um $x_{neu}, y_{neu}$ herum, die von der Retuschefläche bedeckt werden, die entsprechenden Plätze des Ret.-Speichers um "1" erhöhen. (Wenn max. Zählerstand erreicht, dann nicht erhöhen)
$x_{alt} = x_{neu}$
$y_{alt} = y_{neu}$

*Fig. 5*

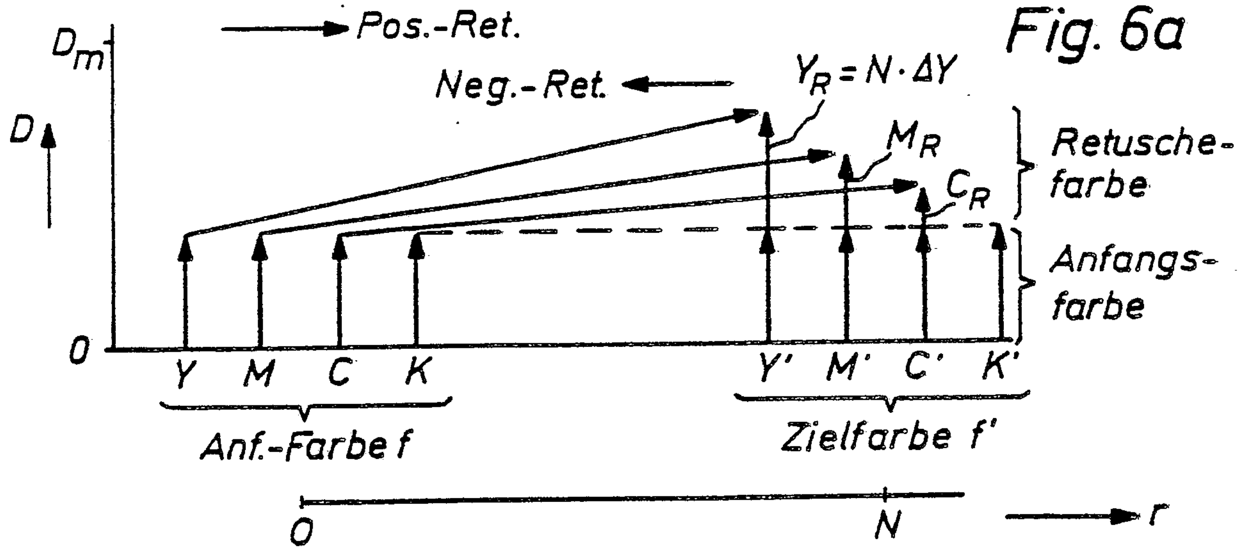


Fig. 6a

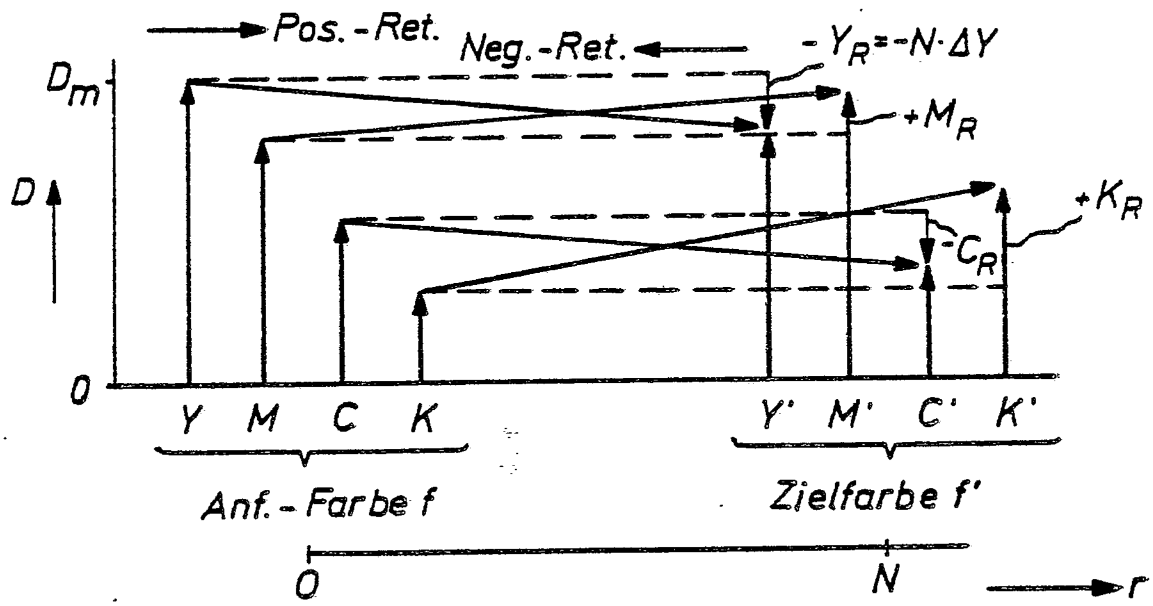


Fig. 6b

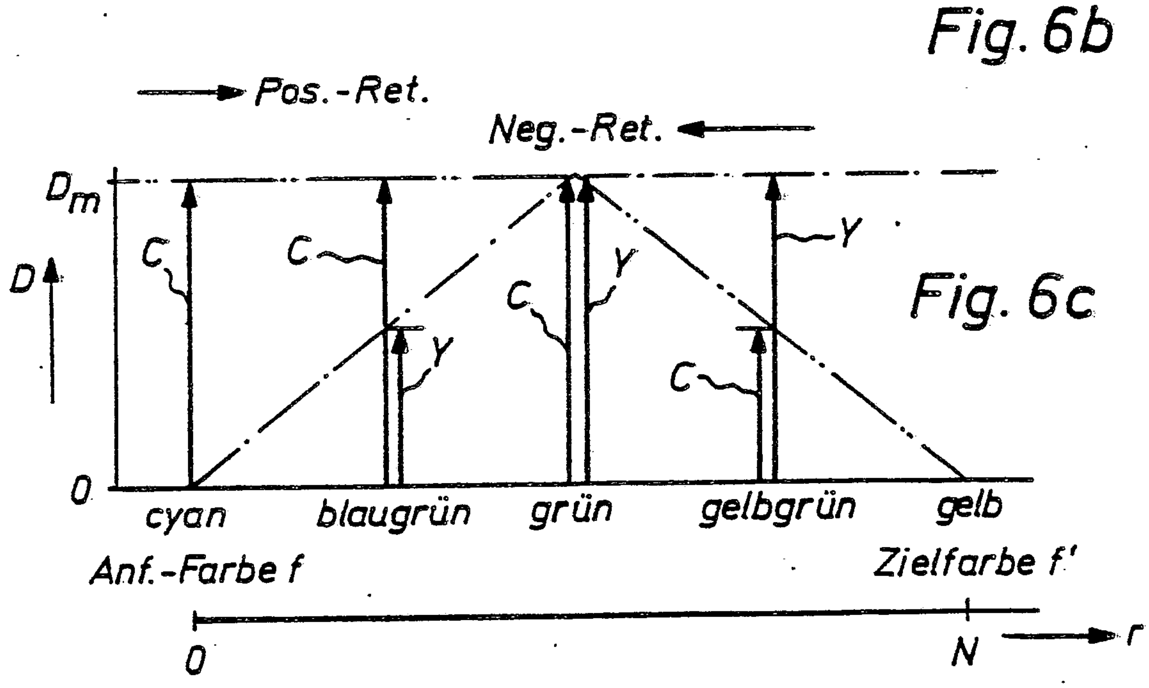


Fig. 6c

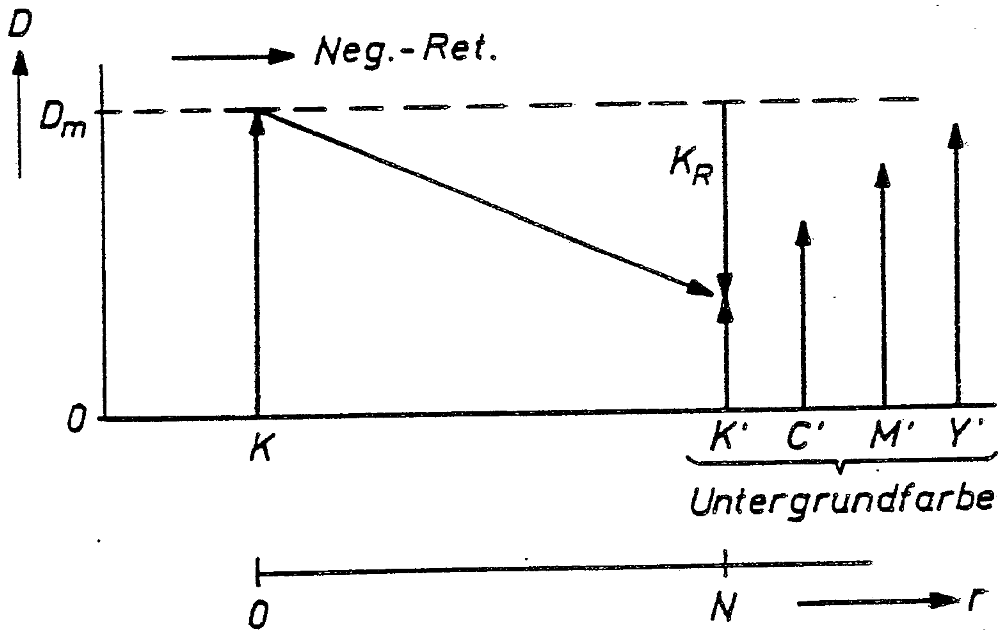
D
Neg.-Ret.
$D_m$
$K_R$
0
K
K'
C'
M'
Y'
Untergrundfarbe
0
N
r

Fig. 6d

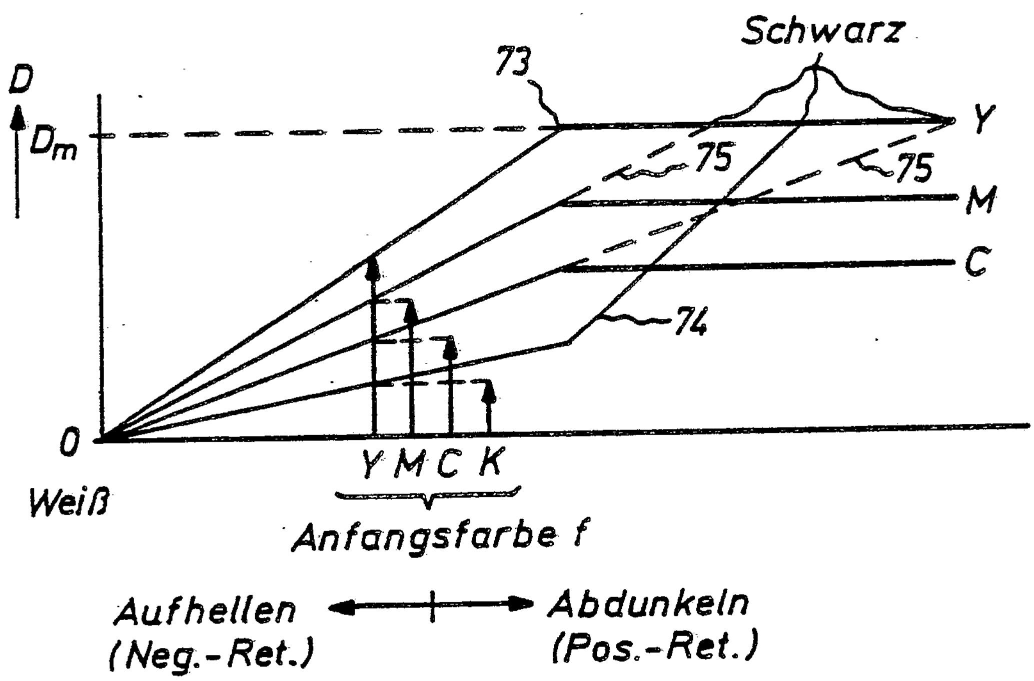
Schwarz
D
73
$D_m$
Y
75
75
M
C
74
0
Y M C K
Weiß
Anfangsfarbe f
Aufhellen
(Neg.-Ret.)
Abdunkeln
(Pos.-Ret.)

Fig. 6e

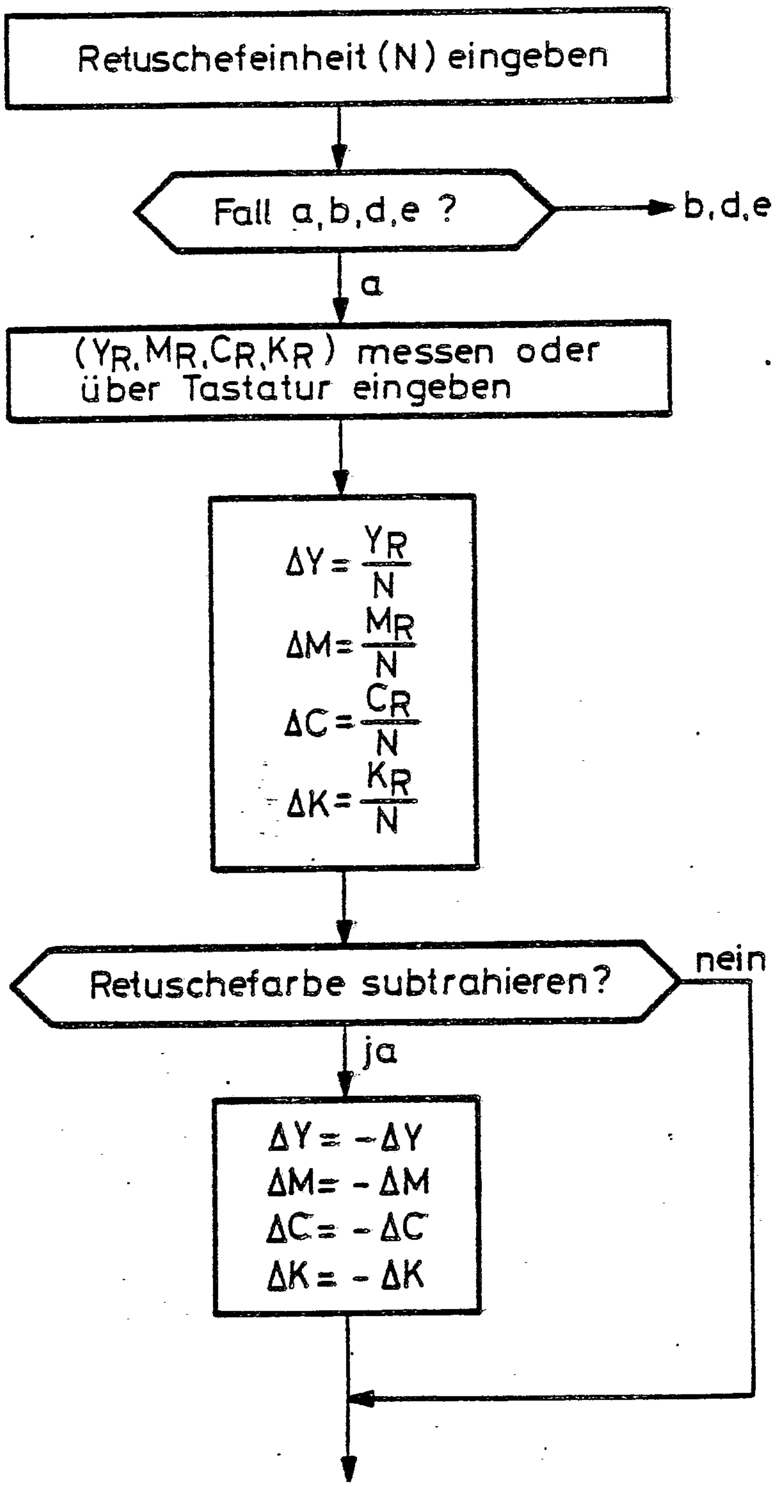

Retuschefeinheit (N) eingeben
Fall a,b,d,e ?
b,d,e
a
(YR,MR,CR,KR) messen oder über Tastatur eingeben
ΔY = YR/N
ΔM = MR/N
ΔC = CR/N
ΔK = KR/N
Retuschefarbe subtrahieren?
nein
ja
ΔY = -ΔY
ΔM = -ΔM
ΔC = -ΔC
ΔK = -ΔK


Fig. 7a

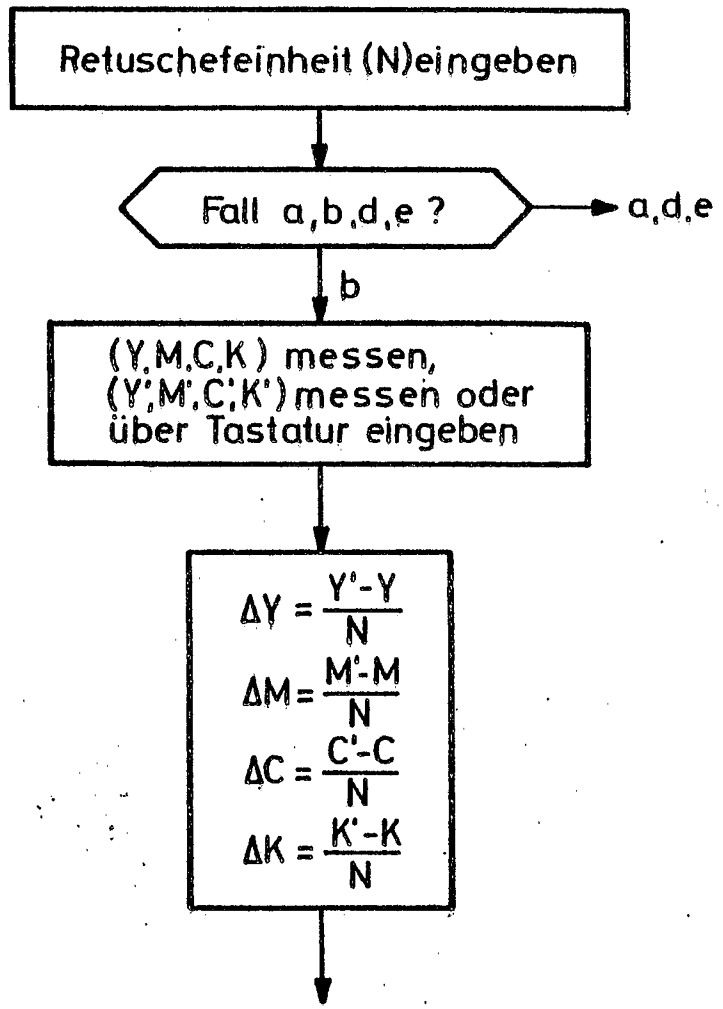
Retuschefeinheit (N)eingeben
Fall a,b,d,e ?
a,d,e
b
(Y,M,C,K) messen,
(Y',M',C',K')messen oder
über Tastatur eingeben
ΔY = (Y'-Y)/N
ΔM = (M'-M)/N
ΔC = (C'-C)/N
ΔK = (K'-K)/N

Fig. 7b

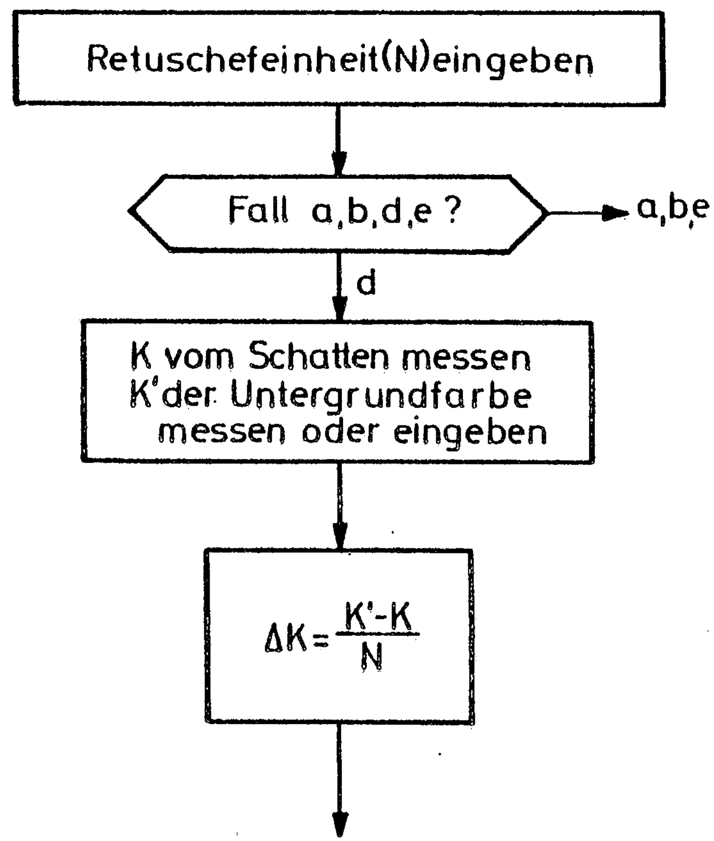
Retuschefeinheit(N)eingeben
Fall a,b,d,e ?
a,b,e
d
K vom Schatten messen
K'der Untergrundfarbe
messen oder eingeben
ΔK = (K'-K)/N

Fig. 7d

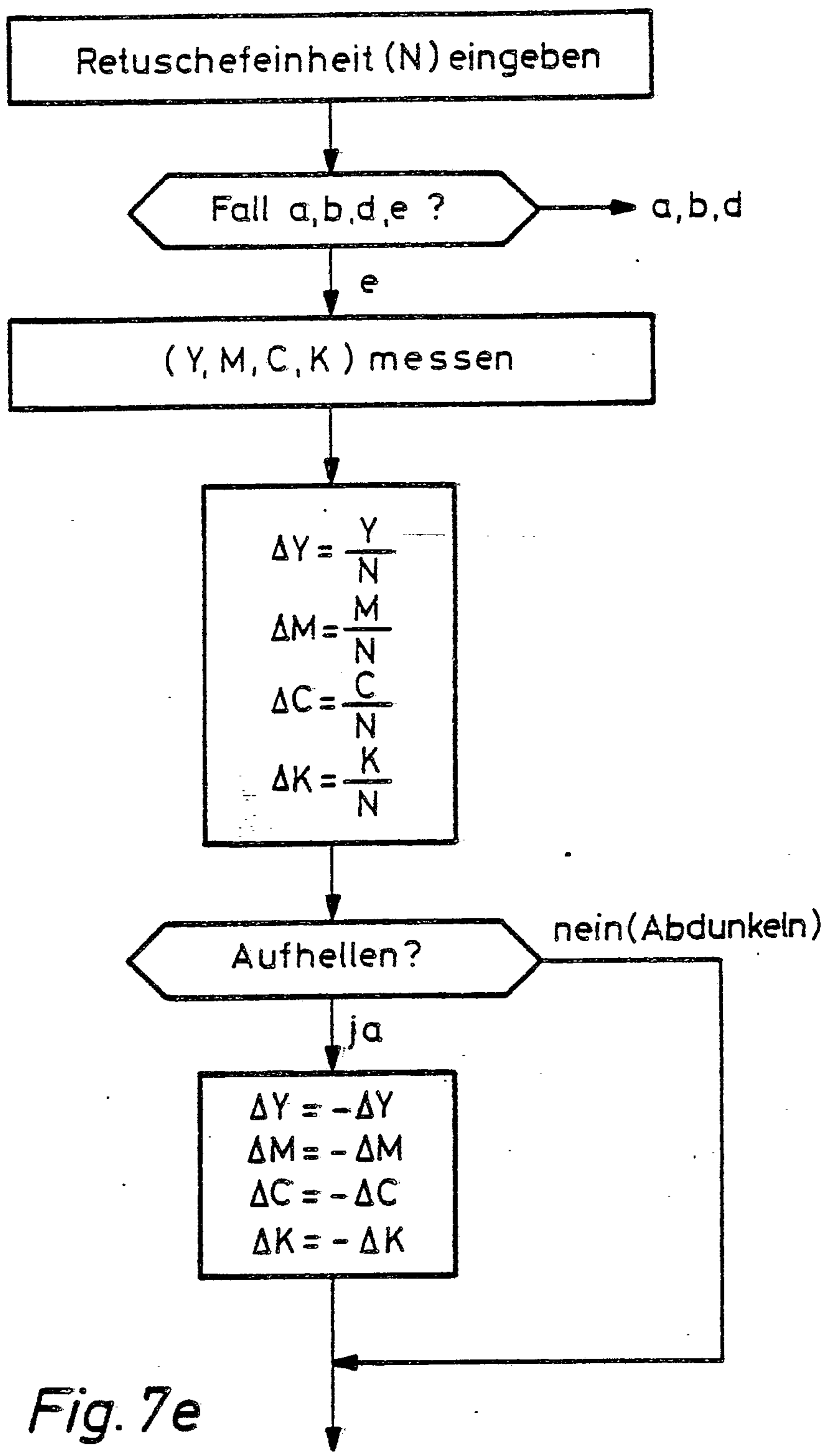
Retuschefeinheit (N) eingeben
Fall a,b,d,e ?
a,b,d
e
(Y, M, C, K) messen
ΔY = Y/N
ΔM = M/N
ΔC = C/N
ΔK = K/N
Aufhellen?
nein (Abdunkeln)
ja
ΔY = -ΔY
ΔM = -ΔM
ΔC = -ΔC
ΔK = -ΔK

*Fig. 7e*

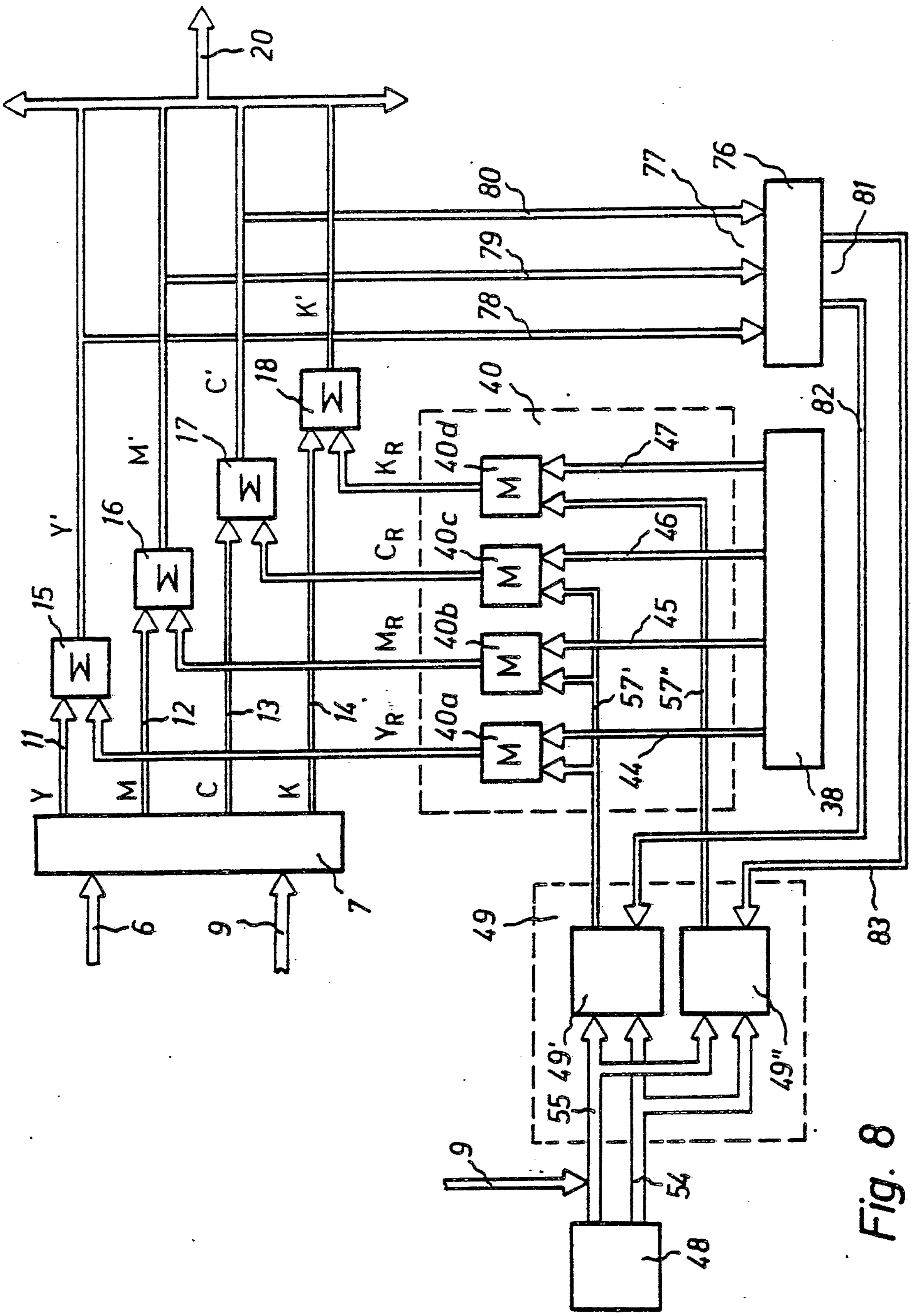

20
Y'
M'
C'
K'
15
16
17
18
80
79
78
77
76
81
82
83
40
40a
40b
40c
40d
YR
MR
CR
KR
Y
M
C
K
11
12
13
14
6
9
7
44
45
46
47
57'
57"
38
49
49'
49"
55
54
48


Fig. 8

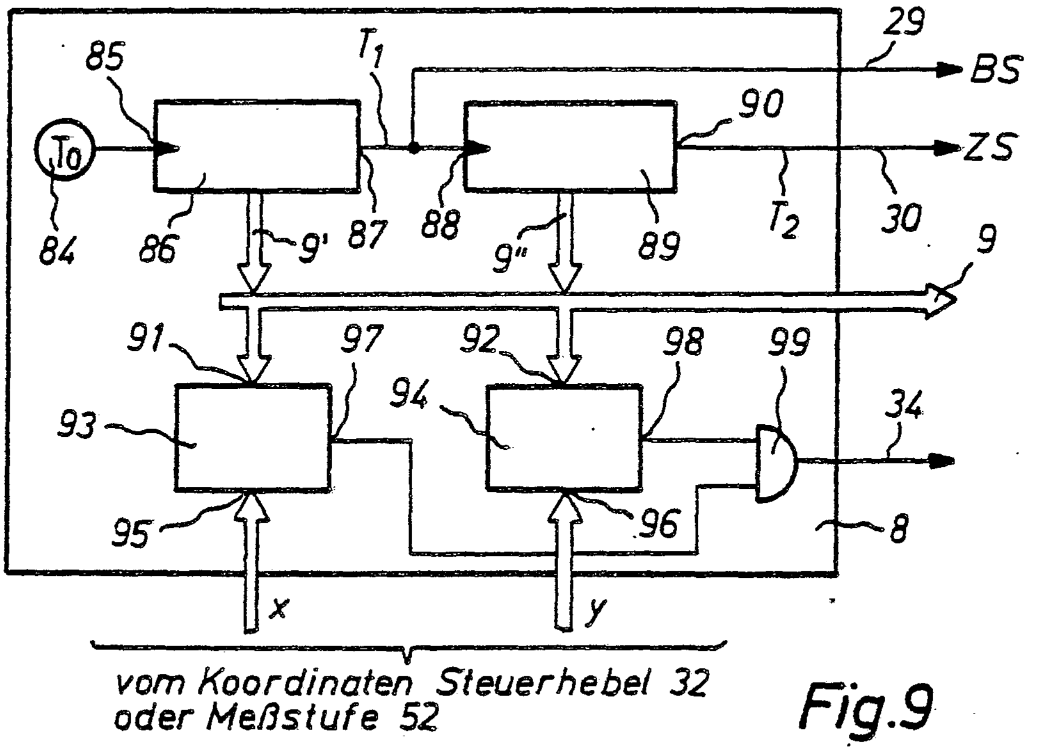
29
BS
85
$T_1$
90
ZS
84
86
9'
87
88
9''
89
$T_2$
30
9
91
97
92
98
99
93
94
34
95
96
8
x
y
vom Koordinaten Steuerhebel 32
oder Meßstufe 52

Fig.9

Fig. 10

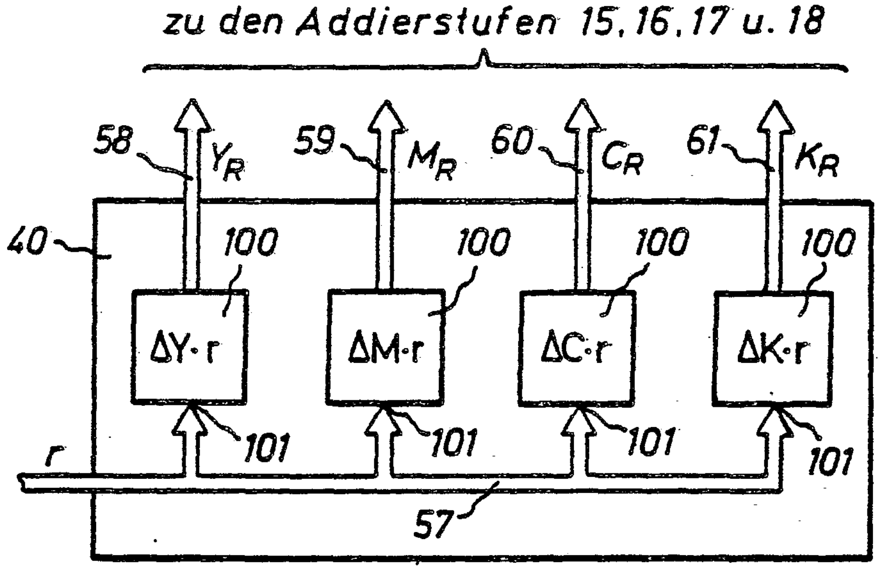
zu den Addierstufen 15,16,17 u. 18
58
$Y_R$
59
$M_R$
60
$C_R$
61
$K_R$
40
100
ΔY·r
ΔM·r
ΔC·r
ΔK·r
101
r
57

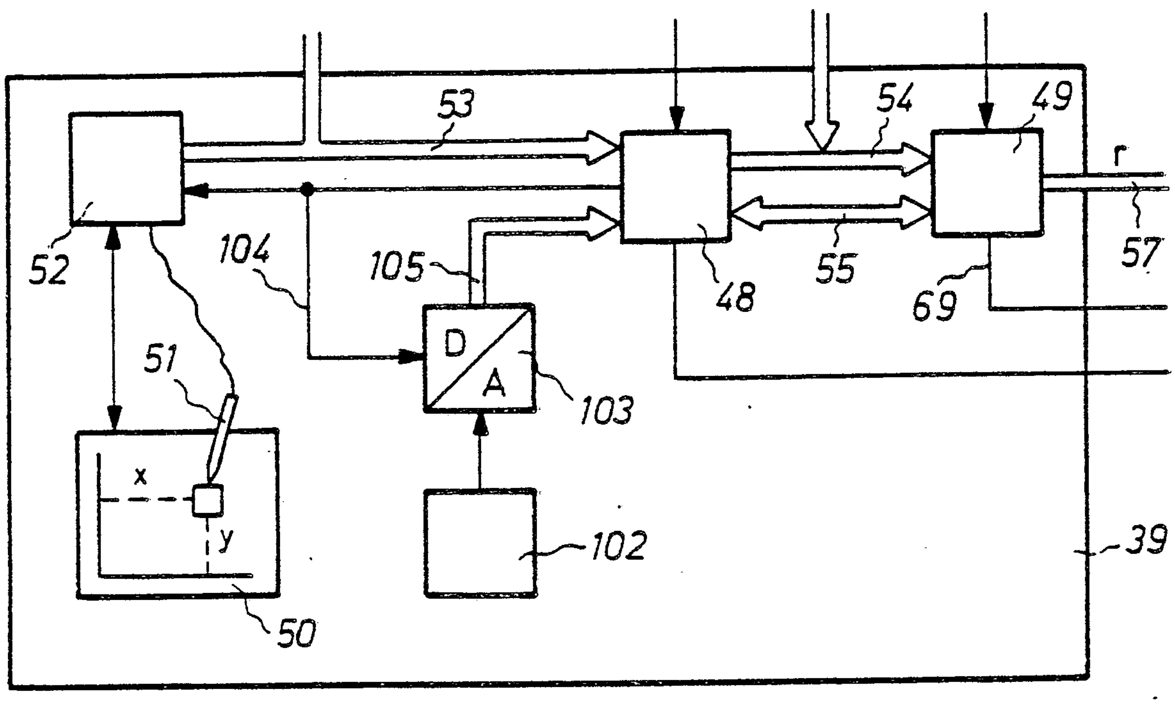
53
54
49
r
52
104
105
48
55
57
69
D
A
51
103
x
y
102
39
50

Fig. 11

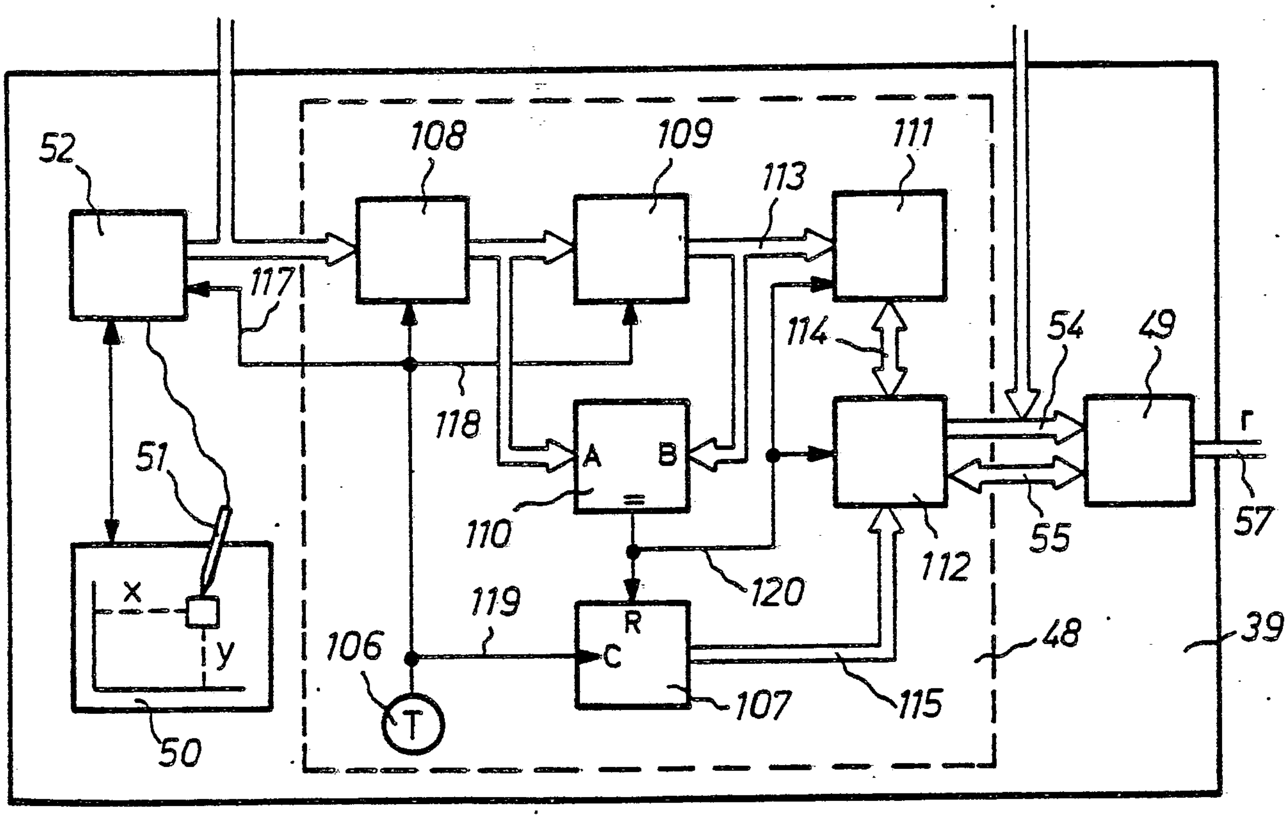
52
108
109
111
113
117
114
54
49
r
118
51
A
B
110
120
55
57
112
119
R
106
C
48
39
x
y
T
107
115
50

Fig. 12

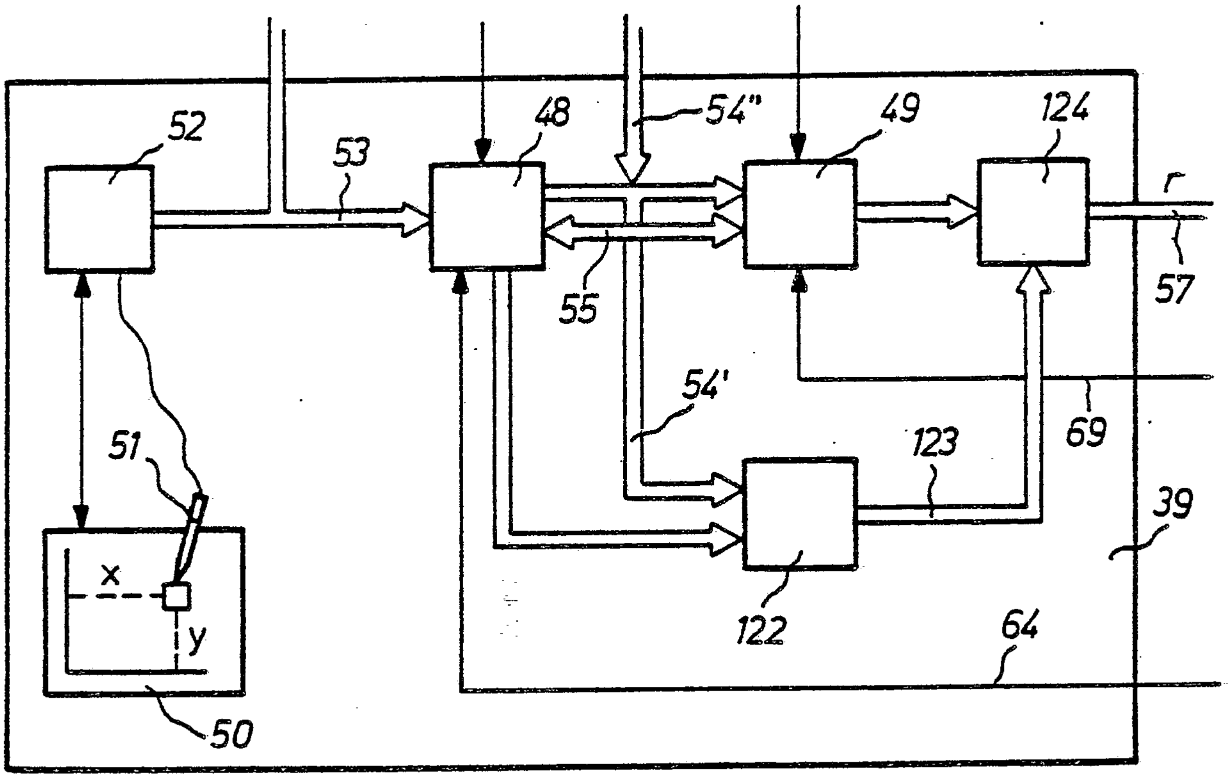


Fig. 13

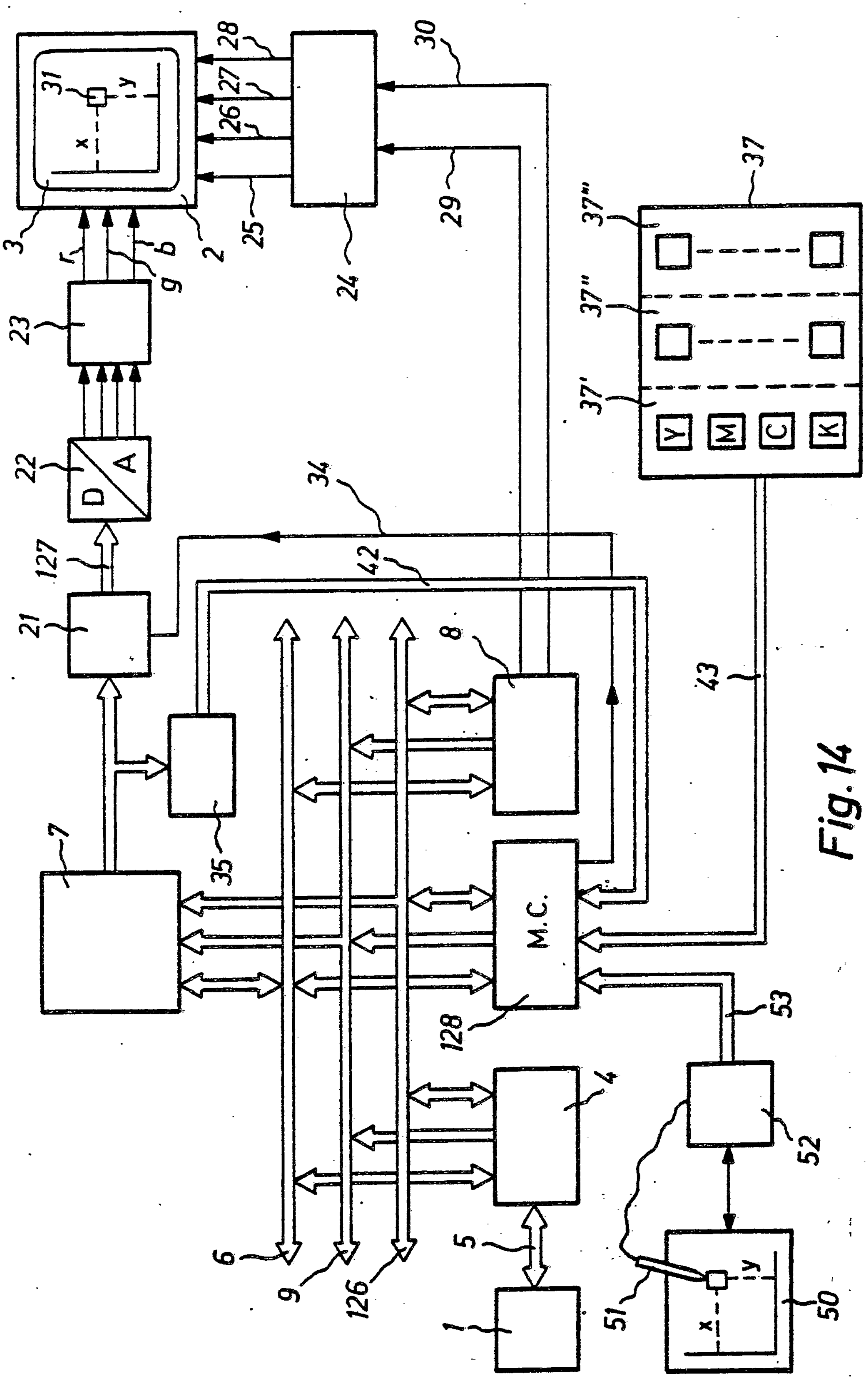


Fig. 14